# EUROPEAN PATENT SPECIFICATION

(11) **EP 4 454 386 B1**
(45) Date of publication and mention of the grant of the patent: **21.10.2026**
(21) Application number: 22747979.7
(22) Date of filing: 06.07.2022
(51) Int. Cl.: H04W 72/542, H04L 5/14, H04L 5/00, H04W 52/24, H04W 52/34, H04W 52/38, H04W 72/0446, H04W 72/121

(54) **TECHNIQUE FOR DOWNLINK TRANSMISSION POWER-AWARE SCHEDULING**
VERFAHREN ZUR DOWNLINK-ÜBERTRAGUNGSLEISTUNGSBEWUSSTEN PLANUNG
TECHNIQUE DE PLANIFICATION SENSIBLE À LA PUISSANCE DE TRANSMISSION DE LIAISON DESCENDANTE

(30) Priority: 22.12.2021 GR 20210100907; 22.12.2021 GR 20210100908
(43) Date of publication of application: 30.10.2024
(73) Proprietor: Telefonaktiebolaget LM Ericsson (publ), 164 83 Stockholm (SE)
(72) Inventor: ASTELY, David, 168 56 Bromma (SE); FRENGER, Pål, 582 27 Linköping (SE); ERIKSSON, David, 74 146 Knivsta (SE); BJÖRNSON, Kristofer, 524 95 Ljung (SE); WERNER, Karl, 141 72 Segeltorp (SE); WERNERSSON, Niklas, 196 36 Kungsängen (SE)
(74) Representative: Murgitroyd & Company
(86) International application number: PCT/EP2022/068745
(87) International publication number: WO 2023/117158

(56) References cited:
- EP-A1- 3 190 732
- US-A1- 2021 385 814

## Description

### Technical Field

The present disclosure relates to a technique for scheduling a plurality of radio devices within a cell of a radio access network (RAN) with a plurality of transmit power levels. The technique applies in particular to downlink (DL) transmissions.

### Background

Radio devices, also referred to as user equipments (UEs), are served by a cell or a base station, also referred to as network node, according to the New Radio (NR) or Long Term Evolution (LTE) standards of the Third Generation Partnership Project (3GPP).

Depending on the relative location of a radio device, e.g., at the cell center or at a cell edge, a channel quality between the radio device and the serving base station may vary significantly. E.g., at the cell center, a signal-to-noise-ratio (SNR) may be high whereas at a cell edge, the SNR may be low. Furthermore, distortions of transmitted signals generally increase with increasing transmit power. To keep distortions lower than the SNR, it is known to apply different transmit power levels depending on the SNR. The transmit power level may be specified relative to a maximal transmit power level as a power backoff (shortly: backoff). However, a conventional problem when transmitting data to many different radio devices (e.g., users) simultaneously is to set the power backoff to an optimum level.

According to a first conventional approach, the power is set uniformly (with the same power per subcarrier) according to the most stringent distortion requirement imposed by the radio device (e.g., user) that would need the highest backoff (and/or the lowest transmit power). However, as a drawback, the radio resources (briefly also: radio or resources) are not fully utilized for cell edge radio devices (e.g., users) that prefer a lower backoff since they can tolerate higher levels of distortions. As a result, the cell edge radio devices (e.g., users) get lower-than-optimal data rates.

According to a second conventional approach, the transmit power is set uniformly according to the cell edge radio devices (e.g., users). However, as a drawback, the cell center radio devices (e.g., users) suffer from distortions and get lower-than-optimal data rates.

According to a third conventional approach, the transmit power on different subcarriers is set differently, for example per subcarrier according to a preferred backoff for cell edge and cell center radio devices (e.g., users), respectively. However, as a drawback, the total transmit power becomes higher than what it would be for the case that the transmit powers were set according to the cell center radio devices (e.g., users), leading to lower cell center data rates. Furthermore, with large power variations over the frequency domain it is much harder to ensure that all requirements on, e.g., out-of-band distortion are fulfilled all the time. E.g., due to random events it is possible that the transmit power distribution in some orthogonal frequency division multiplexing (OFDM) symbols results in a transmit power profile where (e.g., official) requirements are not fulfilled.

The document US 2021/385814 A1 relates to downlink (DL) transmissions using various powers and assigning frequency resources based on the powers. An example base station may transmit, to a first user equipment (UE), an indication of a first transmit (Tx) power for a first DL transmission on a first downlink (DL) resource on a carrier, the first DL resource being at a first frequency. The first DL resource may be at a first frequency. The first Tx power may have a power level configured based on a difference between the first frequency for the first DL resource and an uplink (UL) frequency region of the carrier. Then, the base station may transmit the first DL transmission using the first frequency and the first Tx power.

The document EP 3 190 732 A1 describes a method by which a D2D terminal transmits a synchronization signal in a wireless communication system. The synchronization signal transmission method comprises a step of generating a primary sidelink synchronization signal (PSSS), and a step of transmitting the PSSS. The transmission power of the PSSS is the same as the transmission power of a channel in which system and synchronization-related information is transmitted.

Another problem when radio devices (e.g., users) are scheduled without taking a possible transit power reduction into account, i.e., a transmit power reduction that can be accepted without significant throughput reduction, is that it is unclear what the transmit power will be, making it difficult to reconfigure the transmit power.

### Summary

The scope and objectives of the present invention is defined in the appended independent claims. Specific embodiments of the present invention are defined in the dependent claims.

Accordingly, there is a need for a technique for optimally assigning different, in particular downlink (DL), transmit power levels (and/or different transmit power densities, and/or different transmit powers per subcarrier) to serve multiple radio devices. Alternatively or in addition, there is a need for improving a throughput, in particular in the DL, for multiple radio devices experiencing different channel qualities within a cell.

As to a first aspect, a method of DL scheduling a plurality of radio devices in a cell of a radio access network (RAN) with a plurality of DL transmit power levels (and/or transmit power per subcarriers) is provided. The method comprises or initiates a step of grouping at least two radio devices according to at least two different DL transmit power levels. The grouping comprises allocating each of the at least two radio devices to one of at least two non-empty and disjoint groups. Each group is associated with a different DL transmit power level. The method further comprises or initiates a step of transmitting data to at least one first radio device among the at least two radio devices within a first partition of a transmission time interval (TTI). The first partition of the TTI is assigned a first DL transmit power level associated with a first group among the at least two non-empty and disjoint groups. The first group comprises the at least one first radio device. The method further comprises or initiates a step of transmitting data to at least one second radio device among the at least two radio devices within a second partition of the TTI. The second partition of the TTI is assigned a second DL transmit power level associated with a second group among the at least two non-empty and disjoint groups. The second group comprises the at least one second radio device. The second group differs (and/or is disjoint) from the first group. The second DL transmit power level differs from the first DL transmit power level.

The transmitting of the data to the at least one first radio device within the first partition of the TTI may use the first DL transmit power level. The transmitting of the data to the at least one second radio device within the second partition of the TTI may use the second DL transmit power level.

The at least two non-empty and disjoint groups may mean that each radio device is associated with exactly one group. Alternatively or in addition, any radio device may not be grouped into two or more of the at least two non-empty and disjoint groups.

Grouping at least 2 radio devices into at least 2 non-empty and disjoint groups may mean that, if you have exactly 2 radio devices, each radio device is its own group. For 3 radio devices, there may be two groups (one group containing 2 radio devices, the other group containing the remaining radio device) or three groups (again, each radio device is its own group).

A number of non-empty and disjoint groups may be bounded from above by, and/or may not exceed, a number of different DL transmit power levels within the plurality of DL transmit power levels. E.g., in case of three or more radio devices and two different DL transmit power levels, the three or more radio devices may be assigned to two non-empty and disjoint groups, with each of the two groups associated with one of the two different DL transmit power levels.

The DL transmit power level (also briefly denoted as transmit power level, or transmit power) may refer to a power level (also denoted as transmit power) used by a power amplifier (PA), e.g., of a base station serving the cell. Alternatively or in addition, each of the DL transmit power levels may be specified relative to a maximum DL transmit power level, e.g., of a PA. The relative specifying may comprise determining a backoff, e.g., in decibel (dB), compared to the maximum DL transmit power level. The backoff may also be denoted as (in particular negative) transmit power offset (briefly: power offset). Further alternatively or in addition, the DL transmit power level may comprise, or may be denoted as, a transmit power per subcarrier.

The plurality of DL transmit powers may be associated with a base station (also denoted as network node), a distributed unit (DU), and/or a remote radio head (briefly: RRH; alternatively also denoted as remote radio unit, briefly: RRU) serving the cell of the RAN. E.g., the base station, and/or RRH may comprise, and/or may be connected to, at least one PA.

The TTI may comprise a (e.g., DL) slot (e.g., of a slot duration of 1 ms, 500 micro-seconds, 250 micro-seconds, or 125 micro-seconds according to LTE and/or NR standards). The partition of the (e.g., DL) slot may comprise a sub-slot of the (e.g., DL) slot. E.g., a slot may comprise two or more sub-slots. Alternatively or in addition, the first partition of the TTI may correspond to a first sub-slot, and the second partition of the TTI may correspond to a second sub-slot. According to some embodiments, a partition of the TTI and/or a sub-slot may comprise one or more mini-slots.

A slot may comprise a predetermined number of (e.g., orthogonal frequency-division multiplexing, briefly: OFDM) symbols. E.g., a slot may comprise 14 OFDM symbols.

Alternatively or in addition, the TTI may comprise a plurality of (e.g., DL) slots. The partition of the plurality of (e.g., DL) slots may comprise one (e.g., DL) slot, or a (e.g., consecutive) subset of (e.g., DL) slots of the TTI. E.g., the TTI may comprise at least two slots. Alternatively or in addition, the first partition of the TTI may correspond to a first slot of the at least two slots, and the second partition of the TTI may correspond to a second slot of the at least two slots.

Partitioning the TTI may comprise excluding a (e.g., initial) control region (e.g., at the start of the TTI) from any one of the partitions (e.g., from the first partition). Alternatively or in addition, any one of the partitions of the TTI may comprise a control region (e.g., at the start of the partition of the TTI).

The transmitting of data to at least one first radio device and the transmitting of data to at least one second radio device may be performed by a base station, a DU, and/or a RRH serving the cell. Alternatively or addition, the at least one first radio device and the at least one second radio device, or any one of the at least two radio devices, may be served by the same base station, the same DU and/or the same RRH.

Alternatively or in addition, the at least two radio devices may be located in, and/or served by, a (in particular same) cell.

The method may further comprise or initiate a step of determining the plurality of DL transmit power levels.

The plurality of DL transmit power levels, and/or the grouping of the at least two radio devices, may be determined for a base station, a DU and/or a RRH.

A number of DL transmit power levels within the plurality of DL transmit power levels, and/or a power level for each of the DL transmit power levels within the plurality of DL transmit power levels, may be determined (e.g., quasi-) statically and/or dynamically.

(Quasi-) statically may refer to not performing changes of the DL transmit power levels and/or groupings within an extended period of time, e.g., not changing the plurality of DL transmit power levels for several days, weeks, months or even a lifetime (or deployment, or uninterrupted usage) of the cell.

Dynamically may refer to changes, e.g., on a per-need-basis and/or event triggered. The event trigger and/or need may comprise, e.g., a full DL buffer status with a large amount of data for transmission to a (in particular large) number of radio devices. Alternatively or in addition, the event trigger may comprise a change in the (e.g., total) number of radio devices in the cell.

The plurality of DL transmit power levels may comprise a predetermined spacing of power levels in terms of the backoff. The lowest DL transmit power level among the plurality of DL transmit power levels may be determined based on a minimum requirement on (e.g., comprising a threshold value of) a channel quality. The lowest DL transmit power level may, e.g., be applied for transmissions to radio devices experiencing a large SNR, in particular radio devices at the cell center. Alternatively or in addition, the maximum DL transmit power level may, e.g., be applied to transmission to radio devices experiencing a low SNR, in particular radio devices at a cell edge.

The channel quality may comprise, and/or may be quantified by, a signal-to-noise-ratio (SNR), a signal-to-interference-and-noise-ratio (SINR), a signal-to-distortion-and-noise-ration (SDNR), a signal-to-distortion-interference-and-noise-ratio (SDINR), and/or a channel quality indicator (CQI).

The SDNR and/or SDINR may be derived, and/or inferred, from SNR and/or SINR reports.

A distortion level (also: distortion power level) may be derived, and/or inferred, from the DL transmit power level. E.g., the SDNR (and/or SDINR) may be derived, and/or inferred, from the SNR (and/or SINR), e.g., according to the reports, and the DL transmit power level.

The method may further comprise or initiate a step of determining a DL transmit power level for the at least one first radio device. Alternatively or in addition, the method may further comprise or initiate a step of determining a DL transmit power level for the at least one second radio device. Further alternatively or in addition, the method may further comprise or initiate a step of determining a (e.g., different) DL transmit power level for each of the at least two radio devices.

The determining of the DL transmit power level for any one of the at least two radio devices may correspond to determining the grouping of the at least two radio devices, e.g., in terms of grouping according to absolute DL transmit power levels and/or grouping according to relative DL transmit power levels, e.g., relative to a maximum DL transmit power level.

The first DL transmit power level may be determined based on a DL channel quality of the at least one first radio device. Alternatively or in addition, the second DL transmit power level may be determined based on a DL channel quality of the at least one second radio device. Further alternatively or in addition, the plurality of the DL transmit power levels may be determined based on the (e.g., plurality of) DL channel qualities of a subset, or all, of the at least two radio devices.

The method may further comprise or initiate a step of determining a partitioning of the TTI. The partitioning of the TTI may at least comprise the first partition of the TTI and the second partition of the TTI. Alternatively or in addition, the partitions of the TTI may have equal length or differ in length. E.g., the first partition of the TTI may be shorter than the second partition of the TTI, or *vice versa.*

The TTI may comprise a slot. Alternatively or in addition, the partition of the TTI may comprise a sub-slot (e.g., a mini-slot) of the slot.

The method may further comprise or initiate a step of receiving an indication of a channel quality from the at least one first radio device. Alternatively or in addition, the method may further comprise or initiate a step of receiving an indication of a channel quality from the at least one second radio device. Further alternatively or in addition, the method may further comprise or initiate a step of receiving an indication of a channel quality from each of the at least two radio devices.

The grouping of the at least two radio devices may depend (e.g., directly or indirectly) on the respective channel quality. For example, the grouping may depend directly on the respective channel quality (e.g., on a combination of the transmit power level and the channel quality of the respective radio device), or indirectly (e.g., on the transmit power level associated with the respective radio device, which depends on the channel quality of the respective radio device).

The indication of the channel quality may comprise at least one channel state information (CSI) report. Alternatively or in addition, the indication of the channel quality may comprise at least one CSI interference measurement (CSI-IM). Further alternatively or in addition, the indication of the channel quality may comprise at least one CQI. Further alternatively or in addition, the indication of the channel quality may comprise at least one SNR measurement. Still further alternatively or in addition, the indication of the channel quality may comprise at least one SINR measurement.

The CQl, SNR and/or SINR may be determined (also denoted as measured), based on one or more DL signals (e.g., at least one reference signal, briefly: RS), by any one of the at least two radio devices and reported (also denoted as fed back) to the RAN. Alternatively or in addition, the CQl, SNR and/or SINR may be determined by a base station, DU and/or RRH based on one or more UL signals (e.g., as the indication of the channel quality) from any one of the at least two radio devices (e.g., assuming channel reciprocity). Further alternatively or in addition, the CQl, SNR and/or SINR may be specific to the radio device, which measures one or more DL signals and reports accordingly, and/or to the radio device from which the one or more UL signals are received at the base station, DU, and/or RRH.

Based on the indication of the channel quality, a SDNR and/or SDINR may be determined.

E.g., a distortion level (also: distortion power level) may be derived, and/or inferred, from the DL transmit power level. Alternatively or in addition, the SDNR (and/or SDINR) may be derived, and/or inferred, from the SNR (and/or SINR), e.g., according to the reports, and the DL transmit power level.

Alternatively or in addition, the indication of the channel quality may be derived from the presence and/or absence of a feedback of a previous DL transmission to the respective radio device. The previous DL transmission may be prior in time to the step of grouping and/or to the step of transmitting data to the respective radio device.

The respective radio device may refer to the at least one first radio device, the at least one second radio device, and/or (e.g., individually) any one of the at least two radio devices.

The feedback may comprise an automatic repeat request (ARQ) feedback and/or a hybrid ARQ (HARQ) feedback. Alternatively or in addition, the presence of the feedback may comprise an acknowledgement (ACK) and/or a negative acknowledgement (NACK). E.g., the presence of an ACK may indicate a sufficient channel quality. Alternatively or in addition, the presence of a NACK may indicate an insufficient channel quality, e.g., by a small margin to a sufficient channel quality. Further alternatively or in addition, the absence of a feedback may indicate an insufficient channel quality, e.g., by a large margin to a sufficient channel quality.

The plurality of DL transmission power levels may be static and/or constant over time. Alternatively or in addition, a number of DL transmission power levels within the plurality of DL transmission power levels may correspond to a number of partitions of the TTI. E.g., in case of two different DL transmission power levels, the TTI may be partitioned into two (e.g., the first and the second) partitions.

The partitions of the TTI may have an equal length (e.g., comprise an equal number of, in particular OFDM, symbols) and/or may differ in length (e.g., may comprise different numbers of, in particular OFDM, symbols).

Alternatively or in addition, the plurality of DL transmission power levels may be dynamic and/or may change over time. Alternatively or in addition, a number of DL transmission power levels within the plurality of DL transmission power levels, and/or a transmission power of any one of the plurality of the DL transmission power levels, may be selected based on a DL buffer status (e.g., comprising indications of priorities of data in the buffer) and/or based on priorities of the at least two radio devices.

A buffer status associated with the first group may be indicative of data exceeding a capability of being transmitted within the first partition of the TTI. The data to be transmitted within the first partition of the TTI may be selected according to a predetermined metric.

Alternatively or in addition, a buffer status associated with the second group may be indicative of data exceeding a capability of being transmitted within the second partition of the TTI. The data to be transmitted within the second partition of the TTI may be selected according to the predetermined metric.

The data to be transmitted may be selected within the first partition of the TTI, and/or within the second partition of the TTI, in decreasing order of the predetermined metric. E.g., the data with the highest value of the predetermined metric may be selected for transmission first, the data with the second-highest value of the predetermined metric may be selected for transmission second, and/or the data with the lowest value of the predetermined metric may be selected for transmission last (e.g., within the TTI only if sufficient radio resources are available for transmitting all data within any given, in particular first and/or second, TTI).

The predetermined metric may comprise a priority assigned to a radio device by the RAN. Alternatively or in addition, the predetermined metric may comprise a priority of the data (e.g., queued for transmission in a DL buffer) assigned by a layer of a protocol stack. Further alternatively or in addition, the predetermined metric may comprise a priority assigned to a retransmission. Further alternatively or in addition, the predetermined metric may comprise a queueing time (e.g., in the DL buffer) of the data. Still further alternatively or in addition, the predetermined metric may comprise a channel quality.

The priority may be assigned to the radio device by the RAN based on a service level agreement (SLA), e.g., in terms of a data rate, a delay, and/or a reliability. The reliability may, e.g., differ between mobile broadband and high reliability low latency communications.

The protocol stack may refer to the open systems interconnection (OSI) model, and/or any generalization thereof. Alternatively or in addition, the protocol stack may comprise a Layer 1, which comprises a physical layer (PHY); a Layer 2 or data link layer, which comprises a medium access control (MAC) layer, a radio link control (RLC) layer, and/or a packet data convergence protocol (PDCP) layer; a Layer 3 or network layer, which comprises a radio resource control (RRC) layer; a Layer 4 or transport layer; a Layer 5 or session layer; a Layer 6 or presentation layer; and/or a Layer 7 or application layer.

The priority of the data may be assigned by a higher layer of the protocol stack, e.g., by the RRC layer and/or the application layer (e.g., independently, or differently, for mobile broadband and low-latency high-reliability communications).

Alternatively or in addition, the priority of the data, and/or a priority assigned to a radio device, may be assigned by an operations and maintenance system (e.g., an operations, administration and maintenance, OAM, system), e.g., in dependence of a SLA.

Further alternatively or in addition, the priority may be assigned to a radio device, a traffic type, and/or any combination thereof.

Alternatively or in addition, a retransmission may be assigned a higher priority than an initial transmission.

Any increase and/or ranking of priorities may correspond to an increase and/or ranking of the predetermined metric. E.g., a radio device with a higher priority may be assigned a higher value of the predetermined metric than a radio device with a lower priority.

Further alternatively or in addition, the predetermined metric may increase as the queueing time of the data increases. E.g., a radio device for which data have been queueing in a DL buffer for a long time may be assigned a higher value of the predetermined metric than a radio device for which data have only just (or only recently) arrived at the DL buffer.

Still further alternatively or in addition, the predetermined metric may increase as the channel quality increases.

Alternatively or in addition, a radio device (e.g., user) may be served when the channel quality is good, e.g., above a predetermined threshold. Further alternatively or in addition, it may be avoided to serve a radio device (e.g., user) when the channel quality is bad, e.g., below the predetermined threshold.

If an amount of the data to be transmitted (e.g., to the first group of radio devices) exceeds the radio resources within the first partition of the TTI, the data for transmission in the first partition of the TTI may be selected according a monotonously varying, in particular decreasing, order of the predetermined metric. Alternatively or in addition data not selected for transmission (e.g., to the first group of radio devices) in the first partition of the TTI may be postponed to one or more, e.g., first, partitions of one or more later TTls.

Alternatively or in addition, if an amount of the data to be transmitted (e.g., to the first group of radio devices) exceeds the radio resources within the first partition of the TTI, the data for transmission in the first partition of the TTI may be selected according a monotonously varying, in particular decreasing, order of the predetermined metric. Alternatively or in addition, data not selected for transmission in the first partition of the TTI may be postponed to at least a second partition of the TTI with the first DL transmit power level. Alternatively or in addition, data to be transmitted with the second DL transmit power level, and/or data to be transmitted with any DL transmit power level different from the first DL transmit power level, may be postponed to one or more later TTIs.

The first partition of the TTI may be temporally prior to the second partition of the TTI. Alternatively or in addition, the first DL transmit power may be higher than the second DL transmit power.

If an amount of the data to be transmitted (e.g., to the second group of radio devices) exceeds the radio resources within the second partition of the TTI, the data for transmission in the second partition of the TTI may be selected according a monotonously varying, in particular decreasing, order of the predetermined metric. Alternatively or in addition data not selected for transmission (e.g., to the second group of radio devices) in the second partition of the TTI may be postponed to one or more, e.g., second, partitions of one or more later TTIs.

Alternatively or in addition, if an amount of the data to be transmitted (e.g., to the first group of radio devices) exceeds the radio resources within the second partition of the TTI, the data for transmission in the second partition of the TTI may be selected according a monotonously varying, in particular decreasing, order of the predetermined metric. Alternatively or in addition, data not selected for transmission in the second partition of the TTI may be postponed to at least a third partition of the TTI with the second DL transmit power level. Alternatively or in addition, data to be transmitted with a third DL transmit power level, and/or data to be transmitted with any DL transmit power level different from the (e.g., first and the) second DL transmit power level, may be postponed to one or more later TTls.

At least both the first DL transmit power level and the second DL transmit power level, or any one of the DL transmit power levels within the plurality of the DL transmit power levels, may be hypothetically assigned to transmission resources (also denoted as radio resources). Alternatively or in addition, an ordering of at least both the first partition of the TTI and the second partition of the TTI, or any partition of the TTI, may be determined based on a maximization of a reward function associated with at least both the first group and the second group, or any group.

The reward function may comprise a sum over predetermined metrics. Optionally, the predetermined metrics may comprise one or more of the predetermined metrics from above (e.g., a priority assigned to a radio device by the RAN; a priority of the data assigned by a layer of the protocol stack; a priority assigned to a retransmission; a queueing time of the data; and/or a channel quality).

Alternatively or in addition, the reward function may comprise a sum over a total number of transmission resources, and/or an expected (e.g., total) number of bits, that can be successfully transmitted and/or received. The expected (e.g., total) number of bits, and/or an estimate of throughput may be estimated using the (e.g., estimates of the) channel qualities.

Further alternatively or in addition, the reward function may comprise a sum over negative queueing times. Still further alternatively or in addition, the reward function may comprise an average of negative queueing times.

The grouping of the at least two radio devices may be modified by means of, and/or in response to, a link adaptation for any one of the at least two radio devices.

The link adaptation may comprise, in particular a change of, a modulation order. Alternatively or in addition, the link adaptation may comprise in particular a change of, a channel coding rate. Further alternatively or in addition, the link adaptation may comprise, in particular a change of, a number of multiple-input-multiple-output (MIMO) layers.

The modulation order and the channel coding rate may collectively be denoted as modulation and coding scheme (MCS).

By reducing the MCS and/or reducing the number of MIMO layers, a DL transmission power level may be decreased for any data to be transmitted successfully. Alternatively or in addition, by increasing the MCS and/or increasing the number of MIMO layers, an increase in the DL transmission power level may be required for successfully transmitting the data.

Control information may be transmitted with a predetermined one of the plurality of DL transmit power levels.

The control information may comprise downlink control information (DCI), one or more synchronization signals (SSs), one or more synchronization signal blocks (SSBs), and/or one or more reference signals (RSs), in particular for channel state information (CSI) determination, e.g., CSI-RSs.

The control signaling, or at least a part of the control signaling, may be transmitted at the beginning of the TTI. Alternatively or in addition, the control signaling may be transmitted at the beginning of the first partition of the TTI for scheduling the at least one first radio device, at the beginning of the second partition of the TTI for scheduling the at least one second radio device, and/or at the beginning of any partition of the TTI for scheduling any radio device for transmission in that partition of the TTI.

The method may be performed by a scheduler.

The scheduler, e.g., of the RAN, may be connected to a radio unit. The radio unit may comprise a base station, DU, and/or RRH. Alternatively or in addition, the scheduler may be spaced apart from the radio unit. E.g., the scheduler may be a cloud scheduler and/or may be located at a (e.g., central) management function of the RAN. Further alternatively or in addition, the scheduler may schedule at least two radio units that are spaced apart, e.g., for dual connectivity (DC) and/or coordinated multi point (CoMP) transmissions.

The method may further comprise or initiate a step of sending a capability indication request to a radio unit. The method may still further comprise or initiate a step of receiving, from the radio unit, a capability indication responsive to the capability indication request.

The capability indication may comprise an indication of a capability of performing DL transmission with different DL transmission power levels within different partitions of a TTI.

The capability indication request may be sent on a per-need-basis, e.g., according to a DL buffer status, and/or upon deployment of the radio unit.

The plurality of DL transmit power levels may be provided to the scheduler by a management function of the RAN.

The management function of the RAN may comprise an operations and support system (OSS).

The technique may be implemented in accordance with a 3GPP specification, e.g., for 3GPP release 17. The technique may be implemented for 3GPP LTE according to a modification of the 3GPP document TS 36.104, version 17.56.0, or for 3GPP NR according to a modification of the 3GPP document TS 38.108, version 17.0.0.

Without limitation, any radio device may be a user equipment (UE), e.g., according to a 3GPP specification.

The radio devices and the RAN may be wirelessly connected in a downlink (DL) and/or an uplink (UL) through a Uu interface.

The radio device and/or the RAN may form, or may be part of, a radio network, e.g., according to the Third Generation Partnership Project (3GPP) or according to the standard family IEEE 802.11 (Wi-Fi). The method aspect may be performed by one or more embodiments of a scheduler of the RAN (e.g., a scheduler located at a base station).

The RAN may comprise one or more base stations, e.g., performing the method aspect.

Any of the radio devices may be a 3GPP user equipment (UE) or a Wi-Fi station (STA). The radio device may be a mobile or portable station, a device for machine-type communication (MTC), a device for narrowband Internet of Things (NB-loT) or a combination thereof. Examples for the UE and the mobile station include a mobile phone, a tablet computer and a self-driving vehicle. Examples for the portable station include a laptop computer and a television set. Examples for the MTC device or the NB-loT device include robots, sensors and/or actuators, e.g., in manufacturing, automotive communication and home automation. The MTC device or the NB-loT device may be implemented in a manufacturing plant, household appliances and consumer electronics.

Whenever referring to the RAN, the RAN may be implemented by one or more base stations.

The base station may encompass any station that is configured to provide radio access to any of the radio devices. The base stations may also be referred to as cell, network node, transmission and reception point (TRP), radio access node or access point (AP). The base station may provide a data link to a host computer providing the user data (briefly: data) to one or more radio devices or gathering user data (briefly: data) from the one or more radio devices. Examples for the base stations may include a 3G base station or Node B, 4G base station or eNodeB, a 5G base station or gNodeB, a Wi-Fi AP and a network controller (e.g., according to Bluetooth, ZigBee or Z-Wave).

The RAN may be implemented according to the Global System for Mobile Communications (GSM), the Universal Mobile Telecommunications System (UMTS), 3GPP Long Term Evolution (LTE) and/or 3GPP New Radio (NR).

Any aspect of the technique may be implemented on a Physical Layer (PHY), a Medium Access Control (MAC) layer, a Radio Link Control (RLC) layer, a packet data convergence protocol (PDCP) layer, and/or a Radio Resource Control (RRC) layer of a protocol stack for the radio communication.

Herein, referring to a protocol of a layer may also refer to the corresponding layer in the protocol stack. *Vice versa,* referring to a layer of the protocol stack may also refer to the corresponding protocol of the layer. Any protocol may be implemented by a corresponding method.

As to another aspect, a computer program product is provided. The computer program product comprises program code portions for performing any one of the steps of the method aspect disclosed herein when the computer program product is executed by one or more computing devices. The computer program product may be stored on a computer-readable recording medium. The computer program product may also be provided for download, e.g., via the radio network, the RAN, the Internet and/or the host computer. Alternatively, or in addition, the method may be encoded in a Field-Programmable Gate Array (FPGA) and/or an Application-Specific Integrated Circuit (ASIC), or the functionality may be provided for download by means of a hardware description language.

As to a first device aspect, a scheduler for DL scheduling a plurality of radio devices in a cell of a RAN with a plurality of DL transmit power levels is provided. The scheduler may be configured to perform or initiate any one of the steps, or comprise any one of the features, of the first method aspect.

As to a further first device aspect, a scheduler for DL scheduling a plurality of radio devices in a cell of a RAN with a plurality of DL transmit power levels is provided. The scheduler comprises processing circuitry (e.g., at least one processor and a memory). Said memory comprises instructions executable by said at least one processor whereby the scheduler is operative to perform or initiate any one of the steps, or comprise any one of the features, of the first method aspect.

As to a second device aspect, a base station for DL scheduling a plurality of radio devices in a cell of a RAN with a plurality of DL transmit power levels is provided. The base station may be configured to perform any one of the steps, or comprise any one of the features, of the first method aspect.

As to a further second device aspect, a base station for DL scheduling a plurality of radio devices in a cell of a RAN with a plurality of DL transmit power levels is provided. The base station comprises processing circuitry (e.g., at least one processor and a memory). Said memory comprises instructions executable by said at least one processor whereby the scheduler is operative to perform any one of the steps, or comprise any one of the features, of the first method aspect.

As to a still further aspect a communication system including a scheduler for DL scheduling a plurality of radio devices in a cell of a RAN with a plurality of DL transmit power levels and further including a host computer is provided. The scheduler comprises processing circuitry configured to execute or initiate any one of the steps of the method aspect. The host computer comprises a processing circuitry configured to provide user data (briefly: data). The host computer further comprises a communication interface configured to forward the user data (briefly: data) to a cellular network (e.g., the RAN, the scheduler, and/or the base station) for transmission to a UE.

The communication system may further include the UE. Alternatively, or in addition, the cellular network may further include one or more base stations configured for radio communication with the UE and/or to provide a data link between the UE and the host computer. Any one of the one or more base stations may further comprise the scheduler.

The processing circuitry of the host computer may be configured to execute a host application, thereby providing the data and/or any host computer functionality described herein. Alternatively, or in addition, the processing circuitry of the UE may be configured to execute a client application associated with the host application.

Any one of the devices, the scheduler, the base station, the RAN, the communication system or any node or station for embodying the technique may further include any feature disclosed in the context of the method aspect, and *vice versa.* Particularly, any one of the units and modules disclosed herein may be configured to perform or initiate one or more of the steps of the method aspect.

### Brief Description of the Drawings

Further details of embodiments of the technique are described with reference to the enclosed drawings, wherein:
- Fig. 1: shows a schematic block diagram of an embodiment of a scheduler for DL scheduling a plurality of radio devices in a cell of a RAN with a plurality of DL transmit power levels;
- Fig. 2: shows a flowchart of an embodiment of a method of DL scheduling a plurality of radio devices in a cell of a RAN with a plurality of DL transmit power levels, which method may be performed by the scheduler of Fig. 1;
- Fig. 3: shows an exemplary dependence of a distortion-to-signal ratio on a choice of transmit power levels, with the transmit power levels represented by backoffs relative to a maximal transmit power level;
- Fig. 4: shows exemplary dependencies of a throughput on a SNR experienced by a radio device, with the throughput depending on the choice of backoff representing the transmit power level;
- Fig. 5: shows an example of a base station serving multiple radio devices within a cell;
- Fig. 6: shows an exemplary flowchart of performing a method of DL scheduling a plurality of radio devices in a cell of a RAN with a plurality of DL transmit power levels, which method may be performed by the scheduler of Fig. 1, and/or which method steps may correspond method steps of Fig. 2;
- Figs. 7A, 7B and 7C: schematically illustrate partitionings of a slot comprising 14 OFDM symbols, as an example of a TTI, into one partition of 14 OFDM symbols, into two partitions of 7 OFDM symbols each, and into one partition of two OFDM symbols as well as three partitions of four OFDM symbols each, respectively;
- Figs. 8A and 8B: schematically illustrate the conventional assignment of radio devices to radio resources within one slot, as an example of a TTI, in Fig. 8A versus the grouping of radio devices into two sub-slots, as examples of partitions of the TTI, in Fig. 8B, wherein the grouping of radio devices may be performed by the scheduler of Fig. 1 and/or according to the method of Fig. 2;
- Fig. 9: shows a schematic block diagram of a base station embodying the device of Fig. 1;
- Fig. 10: schematically illustrates an example telecommunication network connected via an intermediate network to a host computer;
- Fig. 11: shows a generalized block diagram of a host computer communicating via a base station with a user equipment over a partially wireless connection; and
- Figs. 12 and 13: show flowcharts for methods implemented in a communication system including a host computer, a base station and a user equipment.

### Detailed Description

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details. Moreover, while the following embodiments are primarily described for a New Radio (NR) or 5G implementation, it is readily apparent that the technique described herein may also be implemented for any other radio communication technique, including a Wireless Local Area Network (WLAN) implementation according to the standard family IEEE 802.11, 3GPP LTE (e.g., LTE-Advanced or a related radio access technique such as MulteFire), for Bluetooth according to the Bluetooth Special Interest Group (SIG), particularly Bluetooth Low Energy, Bluetooth Mesh Networking and Bluetooth broadcasting, for Z-Wave according to the Z-Wave Alliance or for ZigBee based on IEEE 802.15.4.

Moreover, those skilled in the art will appreciate that the functions, steps, units and modules explained herein may be implemented using software functioning in conjunction with a programmed microprocessor, an Application Specific Integrated Circuit (ASIC), a Field Programmable Gate Array (FPGA), a Digital Signal Processor (DSP) or a general purpose computer, e.g., including an Advanced RISC Machine (ARM). It will also be appreciated that, while the following embodiments are primarily described in context with methods and devices, the invention may also be embodied in a computer program product as well as in a system comprising at least one computer processor and memory coupled to the at least one processor, wherein the memory is encoded with one or more programs that may perform the functions and steps or implement the units and modules disclosed herein.

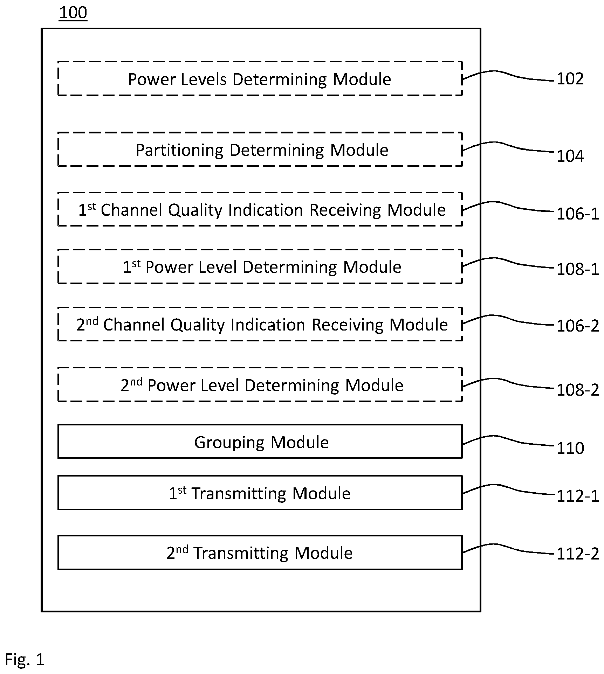

Fig. 1 schematically illustrates a block diagram of an embodiment of a scheduler for downlink (DL) scheduling a plurality of radio devices in a cell of a radio access network (RAN) with a plurality of DL transmit power levels. The scheduler is generically referred to by reference sign 100.

The scheduler 100 comprises a grouping module 110 that is configured to group at least two radio devices according to at least two different DL transmit power levels. The grouping comprises allocating each of the at least two radio devices to one of at least two non-empty and disjoint groups, wherein each group is associated with a different DL transmit power level.

The scheduler 100 further comprises a first transmitting module 112-1 that is configured to initiate transmitting data to at least one first radio device among the at least two radio devices within a first partition of a transmission time interval (TTI). The first partition of the TTI is assigned a first DL transmit power level associated with a first group among the at least two non-empty and disjoint groups. The first group comprises the at least one first radio device.

The scheduler 100 further comprises a second transmitting module 112-2 that is configured to initiate transmitting data to at least one second radio device among the at least two radio devices within a second partition of the TTI. The second partition of the TTI is assigned a second DL transmit power level associated with a second group among the at least two non-empty and disjoint groups. The second group comprises the at least one second radio device.

The second group of radio devices, which comprises the at least the second radio device, differs from the first group of radio devices, which comprises the at least one first radio device. Alternatively or in addition, the second DL transmit power level differs from the first DL transmit power level.

Optionally, the scheduler 100 comprises a power levels determining module 102 that is configured to determine the plurality of DL transmit power levels.

Further optionally, the scheduler 100 comprises a partitioning determining module 104 that is configured to determine a partitioning of the TTI. The partitioning of the TTI may at least comprise the first partition of the TTI and the second partition of the TTI.

Further optionally, the scheduler 100 comprises a first channel quality indication receiving module 106-1 that is configured to receive an indication of a channel quality from the at least one first radio device.

Further optionally, the scheduler 100 comprises a first power level determining module 108-1 that is configured to determine a DL transmit power level for the at least one first radio device.

Further optionally, the scheduler 100 comprises a second channel quality indication receiving module 106-2 that is configured to receive an indication of a channel quality from the at least one second radio device.

Still further optionally, the scheduler 100 comprises a second power level determining module 108-2 that is configured to determine a DL transmit power level for the at least one second radio device.

Any of the modules of the scheduler 100 may be implemented by units configured to provide the corresponding functionality.

The scheduler 100 may be cloud-based. The cloud-based scheduler 100 may be in radio and/or wired communication with at least one base station (also: network node). Alternatively or in addition, the scheduler 100 may be embodied by a base station (also: network node).

The base station may be in direct radio communication with the at least one first radio device and the at least one second radio device, e.g., at least for the transmissions of data to the corresponding radio devices.

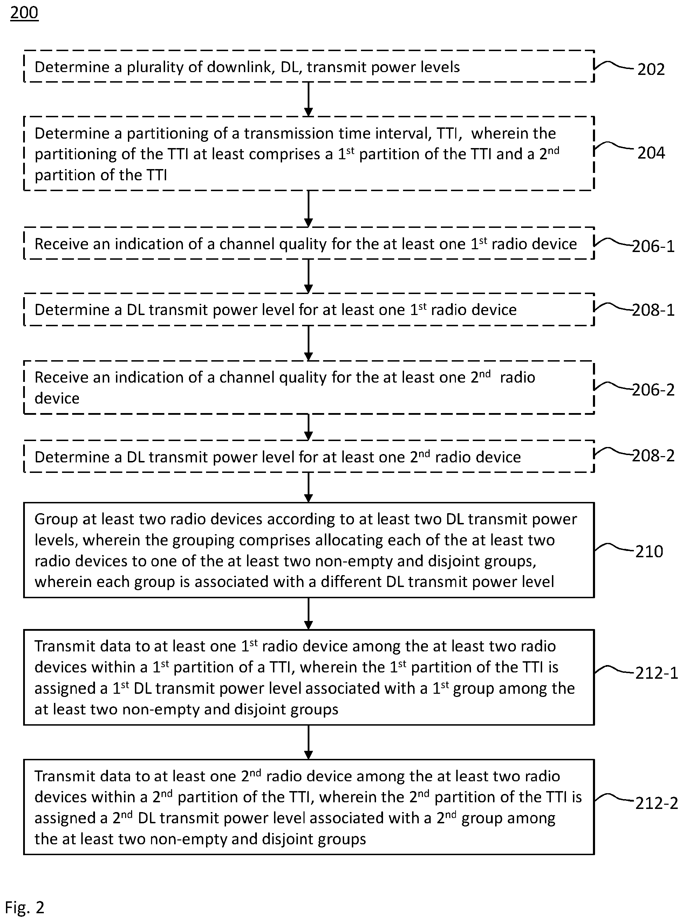

Fig. 2 shows an example flowchart for a method 200 of DL scheduling a plurality of radio devices in a cell of a RAN with a plurality of DL transmit power levels.

In a step 210, at least two radio devices are grouped according to at least two different DL transmit power levels. The grouping comprises allocating each of the at least two radio devices to one of at least two non-empty and disjoint groups. Each group is associated with a different DL transmit power level.

In a step 212-1, data are transmitted to at least one first radio device among the at least two radio devices within a first partition of a TTI. The first partition of the TTI is assigned a first DL transmit power level associated with a first group among the at least two non-empty and disjoint groups. The first group comprises the at least one first radio device.

In a step 212-2, data are transmitted to at least one second radio device among the at least two radio devices within a second partition of the TTI. The second partition of the TTI is assigned a second DL transmit power level associated with a second group among the at least two non-empty and disjoint groups. The second group comprises the at least one second radio device.

The second group, e.g. comprising the at least one second radio device, differs from the first group, e.g., comprising the at least one first radio device. Alternatively or in addition, the second DL transmit power level differs from the first DL transmit power level.

Optionally, in a step 202 the plurality of DL transmit power levels is determined.

Further optionally, in a step 204, a partitioning of the TTI is determined. The partitioning of the TTI may at least comprise the first partition of the TTI and the second partition of the TTI.

Further optionally, in a step 206-1, an indication of a channel quality from the at least one first radio device is received.

Further optionally, in a step 208-1, a DL transmit power level for the at least one first radio device is determined.

Further optionally, in a step 206-2, an indication of a channel quality from the at least one second radio device is received.

Still further optionally, in a step 208-2, a DL transmit power level for the at least one second radio device is determined.

The ordering of the method steps may differ from the example ordering in Fig. 2. E.g., the indications of channel qualities may be received 206-1 from the at least one first radio device and may be received 206-2 from the at least one second radio device independently and/or at different times relative to each other. Alternatively or in addition, the determining 208-1 and 2082 of the DL transmit power level for the at least one first radio device and the at least one second radio device, respectively, may be performed independently and/or at different times relative to each other.

Alternatively or in addition, the steps 202 and 204 of determining a plurality of DL transmit power levels and partitioning the TTI may be combined and/or exchanged. E.g., based on a number of partitions according to reference sign 204, the plurality of DL transmit power levels may be determined 202.

Further alternatively or in addition, the determining 202 of the plurality of DL transmit power levels may be performed on a per-need-basis and/or event triggered, e.g., responsive to receiving 206-1; 206-2 indications of channel qualities from at least two radio devices and/or responsive to determining (e.g., in the steps 208-1; 208-2) that at least two different DL transmit power levels are required (and/or expedient).

The method 200 may be performed by the device 100. For example, the modules 210, 212-1 and 212-2 may perform the steps 110, 112-1 and 112-2, respectively. Alternatively or in addition, the optional modules 102, 104, 106-1, 106-2, 108-1 and 108-2 may perform the steps 202, 204, 206-1, 206-2, 208-1 and 208-2, respectively.

The technique may be applied to downlink (DL) communications between a cell, e.g., served by a base station, of the RAN and a plurality of radio devices comprising at least one first radio device and at least one second radio device.

Herein, any radio device may be a mobile or portable station and/or any radio device wirelessly connectable to a base station or RAN, or to another radio device. For example, the radio device may be a user equipment (UE), a device for machine-type communication (MTC) or a device for (e.g., narrowband) Internet of Things (IoT). Two or more radio devices may be configured to wirelessly connect to each other, e.g., in an *ad hoc* radio network or via a 3GPP SL connection. Furthermore, any base station may be a station providing radio access, may be part of a radio access network (RAN) and/or may be a node connected to the RAN for controlling the radio access. For example, the base station may be an access point, for example a Wi-Fi access point.

The technique of DL scheduling a plurality of radio devices in a cell of a RAN with a plurality of DL transmit power levels presented herein (e.g., in terms of the scheduler 100 and/or the method 200) may generally relate to scheduling in the presence of distortion (e.g., of radio transmissions at a receiver, e.g., one or each of the radio devices to which data are transmitted in the steps 212-1; 212-2). Alternatively or in addition, the technique of DL scheduling a plurality of radio devices in a cell of a RAN with a plurality of DL transmit power levels presented herein may generally relate to link adaptations, power settings, and/or orthogonal frequency-division multiple access (OFDMA).

In a cellular network and/or RAN, the coverage area is divided into cells. More specifically, base stations transmit signals, e.g., comprising control information and/or data, which radio devices (also denoted as mobile users and/or UEs) can detect and measure on to find (e.g., determine and/or be assigned by the RAN) a connection to a suitable base station. The area in which radio devices (e.g., UEs) tend to connect to a certain base station based on measuring a suitable signal (e.g., a cell defining signal) is referred to as a cell.

There may be hundreds or even thousands of radio devices (e.g., as receivers of DL transmissions and/or transmitters of UL transmissions) in a cell. Generally, not all of the radio devices need to receive and/or transmit data at the same time. A scheduler 100, e.g., in the base station, may at any given time consider a buffer status and/or channel conditions and determine (also: decide) which radio devices (e.g., users) to serve and with which radio resources.

The scheduler 100 determining which radio devices to serve and with which radio resources may also be denoted as the scheduler 100 sharing the radio resources within a cell.

When it comes to radio resources, systems such as LTE and NR conventionally first divide the time into slots (as an example of a TTI) with a duration equal to or less than 1 ms. The division into slots allows to share the radio resources in time between different radio devices (e.g., users). Furthermore, orthogonal frequency division multiplexing (OFDM) is conventionally used. Within each slot, there are conventionally 14 OFDM symbols, and each OFDM symbol contains many orthogonal subcarriers (e.g., as a frequency domain) on which data can be transmitted in parallel to the same or to different radio devices (e.g., users).

One can think of the DL signal as a time-frequency grid defined by the OFDM symbols and the subcarriers in the OFDM symbols. The (e.g., quadrature amplitude modulation, QAM) symbol on a single subcarrier in a single OFDM symbol may be referred to as a resource element (RE). Most often for mobile broadband (MBB), scheduling decisions are conventionally communicated using control signaling in the first or first few OFDM symbols in a slot. The remaining symbols are conventionally divided in the frequency domain between different users. A radio device (which may also be denoted as terminal) conventionally decodes the control signaling transmitted in every slot. If it finds an assignment directed to it, it may decode the assignment and determine which resource elements (REs) in the current slot contain data addressed to, or destined for, it.

There is a lot of flexibility in the radio resource assignments for NR, and it is conventionally possible to specify groups of 12 subcarriers in the frequency domain (e.g., as physical resource blocks, PRBs) and to specify which symbols in the time domain are used (e.g., for a DL transmission to a radio device).

The DL of NR and LTE is conventionally operated with fixed power spectral density. The fixed power spectral density comprises that the power per subcarrier is fixed. The total transmit power may still vary from slot to slot (as an example of a TTI), or even from OFDM symbol to OFDM symbol, since the number of PRBs allocated may vary from symbol to symbol.

The radio channel conditions, such as the signal-to-interference-and-noise ratio (SINR) and/or the radio channel properties are generally different for different radio devices (e.g., users) within a cell. Alternatively or in addition, the SINR and/or radio channel properties for a radio device may also vary with time due to a radio device (also denoted as terminal) movement (e.g., relative to the cell) and/or the radio device environment (e.g., the radio device being located in a car or train) movement. The scheduler 100 (e.g., located at a base station) may take the varying channel conditions into account. The (e.g., serving) base station may adapt transmission parameters such as number of a MIMO layers, a modulation order, a channel coding rate, and/or a modulation and coding scheme (MCS). Alternatively or in addition, any adaptation of the transmission parameters may be referred to as link adaptation. The link adaptation is conventionally based on so called channel state information (CSI) feedback from the radio devices (also: terminals).

Herein, whenever referring to noise or a signal-to-noise ratio (SNR), a corresponding step, feature or effect is also disclosed for noise and/or interference, or a signal-to-interference-and-noise ratio (SINR), or *vice versa.*

The CSI feedback may comprise a rank indicator (RI), a precoding matrix indicator (PMI) and/or a channel quality indicator (CQI). The CSI feedback may be determined by the radio devices (also: terminals) using channel, noise and/or interference estimates obtained using to the radio device (also: terminal) known reference signals (e.g., CSI-RS) and/or assumptions of a transmit power spectral density.

The signals transmitted from antennas are typically processed by a radio chain. Baseband signals may be subject to peak to average power reduction, up-conversion, digital predistortion, power amplification and/or filtering. The purpose is to generate a signal that satisfies requirements on its spectrum (e.g., low enough distortions outside the allocated spectrum). Through peak to average power reduction, a power amplifier (PA) may be operated more efficiently (e.g., with higher average power closer to the power amplifier's saturated peak power) at the expense of distortions.

There is a tradeoff between distortions on the one hand and average transmit power (and/or total transmit power and/and efficiency) on the other hand. The higher the input transmit power to the radio unit, radio stage, and/or PA (and/or the corresponding output transmit power from the radio unit, radio stage, and/or PA, which is fed to the antenna), the higher generally are the distortions. The more distortions can be tolerated, the more the peak to average transmit power may be reduced and the higher the average transmit power may be. Alternatively or in addition, the closer to the peak transmit power of the (e.g., power) amplifier the RAN (e.g., the base station) can operate, the higher the efficiency may be. Alternatively or in addition, the level of distortions may be reduced by decreasing the transmit power.

A difference in terms of an average maximum nominal output transmit power (briefly: maximum transmit power), e.g., per symbol on a single OFDM subcarrier, and the actual transmit power used may be referred to as (e.g., transmit) power backoff, or briefly backoff. E.g., the maximum total transmit power may be 49 dBm (corresponding to approximately 80 W) for an OFDM carrier with 1272 subcarriers. The average maximum nominal power is then 49 - 10 *log*₁₀ 1272 ~18 dBm (corresponding to approximately 63 mW) per subcarrier. A backoff of 3 dB (corresponding to half the power, e.g., 40 W total transmit power) corresponds to using 15 dBm power (corresponding to approximately 32 mW) per subcarrier whereas 12 dBm (corresponding to approximately 16 mW) corresponds to a backoff of 6 dB (corresponding to a quarter of the power, e.g., 20 W total transmit power).

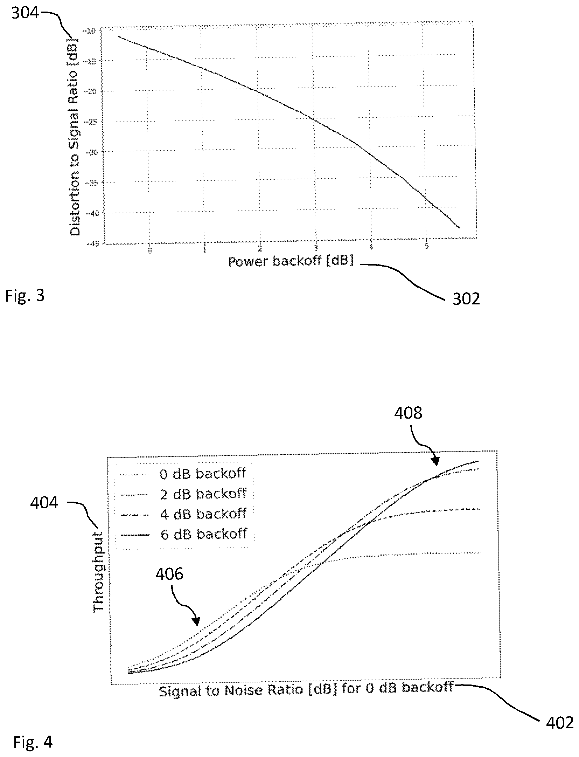

Fig. 3 demonstrates how distortions, as indicated as distortion to signal ratio in dB on the ordinate at reference sign 304, can depend (e.g., as a function) onthe (e.g., total) transmit power (e.g., summed over all subcarriers) in terms of the backoff, as indicated in dB on the abscissa at reference sign 302. In the example of Fig. 3, it is assumed that all subcarriers are active so that the maximum total output transmit power is used.

As can be seen in Fig. 3, the lower the transmit power (and/or the higher the power backoff at reference sign 302) is, the lower the level of distortions is.

The level of distortions generally depends on the total transmit power. For a fixed power spectral density, this means that the level of distortions generally depends on the number of used subcarriers. The maximum distortion power is obtained when all the subcarriers are used.

Radio devices (also denoted as terminals) may experience thermal noise (N), intercell and/or intracell interference (I), distortions (D), and/or any combination thereof. The data rate that can be supported generally depends on the signal power (S) relative to all the impairments, e.g., depends on the signal-to-distortions-plus-interference-plus-noise ratio (SDINR).

A cell center radio device (e.g., terminal) may, e.g., denote a radio device (e.g., terminal) for which the interference plus noise (I+N) is low. A cell center radio device (e.g., terminal) may be more sensitive to distortions than a radio device located at a cell edge and/or a radio device with high interference and/or noise, e.g., a high (I+N).

Any radio device (e.g., terminal), e.g., a cell center radio device, may preferably be served with a backoff such that a distortions power D is small relative I+N.

For a cell edge radio device (e.g., terminal), for which interference and noise (I+N) is higher, a higher distortion power D may be tolerated, e.g., compared to a cell center radio device, and consequently a low, or a lower, backoff corresponding to a high, or higher, transmit power may be used.

In Fig. 4, exemplary throughputs (on the ordinate at reference sign 404) are illustrated as a function of a nominal SNR (on the abscissa at reference sign 402) for different values of the (e.g., power) backoff, e.g., for 0 dB backoff, 2 dB backoff, 4 dB backoff and 6 dB backoff. The nominal SNR in the examples of Fig. 4 refers to the (e.g., fictional) SNR without any backoff (0 dB backoff). For simplicity, in the illustrative examples of Fig. 4, the intercell interference (I) has been neglected.

As can be seen in Fig. 4, the best backoff depends on the (e.g., nominal) SNR. For the lower or lowest SNRs, e.g., at reference sign 406, applying no backoff offers the highest throughput. By contrast, when the SNR increases, then performance in terms of throughput saturates with increasing SNR due to the distortions. The higher or highest backoffs offer also the highest throughputs for high enough SNR, e.g., as shown at reference sign 408 in Fig. 4. Thus, a backoff tends to shift the curve (e.g., as exemplified in Fig. 4 in the low SNR range at reference sign 406) to the right (e.g., due to the reduction of the received signal power at the receiver, which may be directly related to the reduction of the transmit power), while at the same time tending to increase the maximum data rate which otherwise is limited by distortions (e.g., as exemplified in Fig. 4 in the high SNR range at reference sign 408).

Different radio devices (e.g., terminals) generally have different channel conditions in terms of, e.g., SNR and/or SINR, and consequently prefer different backoffs.

Alternatively or in addition, the level of distortions that can be tolerated for, or by, a radio device depends on the SNR and/or SINR experienced by, and/or measured at, the radio device (e.g., terminal).

The discussion above on distortions and backoffs assumes the worst case, namely that all PRBs are used, which gives the highest distortion power. One could argue that, e.g., using only half the PRBs would give a 3 dB backoff, but the SDNR and/or SDINR improvements have not been seen to compensate for only being able to use half of the resource blocks (e.g., PRBs). So, backoff based on a conservative assumption allows to use all the PRBs.

The maximum throughput is generally limited by the number of resource elements (REs), the maximum number of MIMO layers, the modulation order, and the code rate. E.g., independently of how high the SNR and/or SINR becomes for a radio device, throughput cannot be increased if already the highest modulation order is used (e.g., 256-QAM), the maximum code rate is used (e.g., around 0.95) and/or the maximum number of MIMO layers (e.g., four MIMO layers). Alternatively or in addition, not only the distortions limit the throughput, but also the modulation and coding scheme (MCS, which is the combination of modulation order and channel code rate), the number of, e.g., MIMO, layers, and/or any combination thereof.

A limitation due to MCS, which, e.g., corresponds to a throughput that is constant for all SNRs above a certain (e.g., threshold) high SNR, conventionally occurs for cell center radio devices (e.g., users) close to the base stations. For such radio devices (e.g., users) it is thus possible to reduce the transmit power without any significant penalty in terms of throughput. Alternatively or in addition, for cell center radio devices (e.g., users) a DL transmit power may be reduced to save energy, while still maintaining the throughput and/or without significantly reducing the throughput.

When the total transmit power is reduced, it may be possible to reconfigure the radio unit and/or radio stage so that the power amplifier (PA) becomes more efficient for the lower transmit power.

A conventional problem when transmitting data to many different radio devices (e.g., users) simultaneously is to set the power backoff to an optimum level.

According to a conventional approach, the transmit power may be set uniformly (with the same power per subcarrier) according to the most stringent distortion requirement imposed by the radio device (e.g., user) that would need the highest backoff (and/or the lowest transmit power). However, as a drawback, the radio is not fully utilized for cell edge radio devices (e.g., users) that prefer a lower backoff since they can tolerate higher levels of distortions and therefore, they get lower data rates than possible, as exemplified at reference sign 406 in Fig. 4.

According to an alternative conventional approach, the transmit power may be set uniformly according to the cell edge radio devices (e.g., users). However, as a drawback, the cell center radio devices (e.g., users) suffer from distortions and get lower data rates than possible, as exemplified at reference sign 408 in Fig. 4.

According to another alternative conventional approach, the transmit power may be set differently on the different subcarriers, e.g., per subcarrier according to a preferred backoff for cell edge and cell center radio devices (e.g., users), respectively. However, as a drawback, the total transmit power becomes higher than what it would be for the case that the transmit powers were set according to the cell center radio devices (e.g., users), leading to lower cell center data rates. Furthermore, with large transmit power variations over the frequency domain, it is much harder to ensure that all requirements on, e.g., an out-of-band distortion are fulfilled at all times. E.g., due to random events the transmit power distribution in some OFDM symbols may result in a transmit power profile where (e.g., official) requirements (e.g., on a total transmit power, in particular outside of the allocated frequencies) are not fulfilled.

Another conventional problem when radio devices (e.g., users) are scheduled without taking the possible transmit power reduction into account, e.g., any transmit power reduction that can be accepted without significant throughput reduction, is that it is unclear what the transmit power will be, and this may make it difficult to reconfigure the transmit power.

By the inventive concept, radio devices (e.g., users) which prefer the same power backoff are scheduled at the same time. The power amplifiers are configured such that they transmit the OFDM symbols with the preferred backoff. Radio devices (e.g., users) with different preferred backoffs are assigned radio resources in different OFDM symbols.

Herein, the power backoff (or briefly: backoff) may refer to a transmit power reduction needed to avoid distortions, and/or tolerated without significant throughput degradation.

In a preferred embodiment for the downlink of 3GPP NR, slots are divided into sub-slots, and in each such sub-slot, radio devices (e.g., users) with the same (e.g., preferred) backoff are scheduled.

According to the invention, a backoff is considered (e.g., chosen) that is needed to avoid radio distortions, and that is acceptable to avoid any, e.g., significant, throughput degradation. The backoff is chosen when scheduling so that radio devices (e.g., users) with the same backoff are scheduled simultaneously and/or in the same partition of the TTI, e.g., the same sub-slot, and so that the PA power settings optionally can be adjusted to the selected (e.g., chosen) power level when transmitting (e.g., data in the DL).

The inventive concept allows to operate the radio unit, radio stage, and/or PAs with as high transmit power (and/or as low backoff) as possible without sacrificing high peak rates to cell center radio devices (e.g., users). Alternatively or in addition, there is no need to sacrifice cell center peak rates to support as good coverage as possible.

By partitioning a TTI into partitions, e.g. partitioning an NR slot into sub-slots, a low, or lower, impact on latency may be achieved (e.g., as compared to the case if the setting of the DL transmit power level was done at the TTI, e.g., slot, level).

Operating the power amplifiers in a radio unit with full (e.g., total) transmit power and as low power backoff as possible can result in increased efficiency when transmitting. Increased efficiency can reduce thermal losses and enable smaller and more lightweight products to be designed. Alternatively or in addition, given a size and weight constraint, the product (e.g., the radio unit, base station and/or the PA) can be made more capable in terms of delivering high capacity and high (e.g., user) throughput.

Alternatively or in addition, the inventive concept can result in lower average energy consumption due to the increased efficiency when transmitting. Further alternatively or in addition, due to the increased data rate for the served radio devices (e.g., users), more time may be available for power saving sleep modes, e.g., in a base station. Still further alternatively or in addition, the operational cost for operators as well as the environmental impact of the products (e.g., the radio units, base stations and/or PAs) may be reduced.

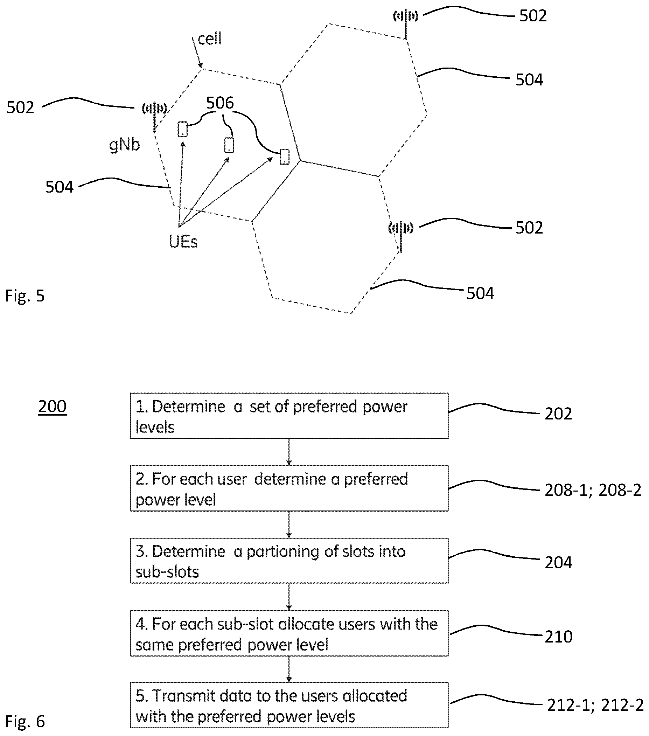

The inventive concept applies to a downlink radio access system as exemplified in Fig. 5, e.g., a system based on 3GPP NR where a next Generation Node B (gNB, e.g., as an example of a base station) 502 serves multiple radio devices (e.g., mobile user equipments, briefly UEs) 506 in a cell 504.

The invention is related to the base station (e.g., gNB) 502 and includes scheduling as well as setting the transmit power (e.g., the total transmit power and/or any one, or each, of the DL transmit power levels) of the base station (e.g., gNB) 502 for the transmission of downlink data to the radio devices (e.g., UEs) 506.

Fig. 6 shows an exemplary embodiment of performing the method 200, e.g., at a base station (e.g., gNB) 502. Contrary to prior art, in the step 210, radio devices (e.g., users) with the same preferred transit power level, and/or equivalently the same preferred backoff, are assigned radio resources at the same time.

In the exemplary embodiment of Fig. 6, at reference sign 202, a set of preferred DL transmit power levels is determined. There is generally a tradeoff between the transmit power (and/or equivalently the backoff) and the level of distortions as exemplified in Fig. 3. A first step at reference sign 202 thus may comprise to determine (and/or decide on) a few different DL transmit power levels. E.g., the three different backoffs (e.g., 1dB, 3dB and 5dB), may be selected corresponding to signal-to-distortion ratios (SDRs) of 15 dB, 25 dB and 35 dB, respectively.

Alternatively or in addition, standardized error vector magnitude (EVM) requirements (e.g., according to the 3GPP TS 38.104 V17.5.0) may be considered, and backoffs may be selected as 1.5 dB and 4 dB to meet EVM requirements (e.g., of 12.5 %, or higher and 3.5 %, or higher, respectively) for 16-QAM (and/or QPSK) and 64-QAM (and/or 256-QAM), respectively. Alternatively or in addition, the selected backoffs of 1.5 dB and 4 dBmay be used for quadrature phase shift keying (QPSK, alternatively denoted as 4-QAM) and 64-QAM, respectively.

E.g., since QPSK has a higher EVM requirement as compared to 16-QAM, one can use the same backoff for both 16-QAM and QPSK. Alternatively or in addition, one can use the same backoff for both 64-QAM and 256-QAM. E.g., is possible to have only two different transmit levels, e.g., instead of four different transmit level (e.g., one for each modulation).

Alternatively or in addition, it is possible to increase, and/or add additional (in particular larger), backoffs to radio devices (e.g., users) that can tolerate less DL transmit power without significant throughput reduction. E.g., sets of backoffs {1.5 dB, 4dB and 7dB} or {1.5dB and 7dB} may be applied.

With too few DL transmit power levels, there might be scheduling constraints. Alternatively or in addition, according to a preferred embodiment, two or three different DL transmit power levels are chosen (also: selected).

The DL transmit power level and the associated distortion level may also consider typical characteristics of the cell (e.g., served by a base station) in terms of distributions of the SNRs and/or SINRs for radio devices (e.g., users) served. If, e.g., essentially all radio devices (e.g., users) have very low SNRs and/or low SINRs, only low backoffs (and/or high DL transmit power levels) are needed whereas if all SNRs and/or all SINRs are high, only high backoffs (and/or low distortions, and/or low DL transmit power levels) are applicable.

At reference signs 208-1; 208-2 in Fig. 6, for each radio device (e.g., user) a preferred DL transmit power level is determined. The level of distortions should preferably be (comparable or) small relative to noise and (e.g., intercell) interference. To determine the preferred DL transmit power level, and/or to determine the preferred backoff, essentially the SNR and/or SINR is in case that there are no distortions may be determined.

According to an embodiment, the preferred backoff is determined based on CSI reports from the radio devices (e.g., terminals). E.g. according to one embodiment, distortions may be added (and/or injected) into the *radio* resources used for interference measurements (CSI-IM). Alternatively or in addition, according to a further embodiment, a base station (e.g., gNB) 502 may control the DL transmit power level in symbols with CSI-IM such that distortions are low enough.

E.g., by combining the two above embodiment, it is possible to compare multiple CSI reports for different levels of distortions corresponding to different backoffs (e.g., as exemplified in Fig. 3) and take the preferred backoff as the one corresponding to the best CSI report in terms of a recommended data rate.

Alternatively or in addition, to determine if the DL transmit power level could be reduced without significant degradation, a radio device (e.g., terminal) may be asked to generate CSI reports for multiple different DL transmit power levels. The results of the CSI reports may be compared as to a preferred level.

Further alternatively or in addition, SNR and/or SINR measurements defined by the 3GPP NR standard (e.g., measurements based on one or more SSs, briefly: SS-SINR, and/or measurements based on CSI, briefly: CSI-SINR) may be used to receive an indication of the SNR and/or SINR and from that select a power backoff such that the SDR is small, or smaller (e.g., than a threshold), while the SNR and/or SINR is still high enough so that there is no significant throughput reduction.

Still further alternatively or in addition, different backoffs may be used to measure the actual throughput based on a feedback, e.g., comprising ACK and/or NACKs, in response to a data transmission. The backoff that gives the highest throughput, e.g., as based on ACK feedback, may be selected.

Alternatively or in addition, any one of the methods for determining preferred DL transmit power levels, e.g., per radio device, may be used in combination. E.g., CSI reports may be combined with observations of the presence of ACK and/or NACK feedback, or the absence of any feedback.

At reference sign 204 in Fig. 6, a partitioning of slots (as an example of TTls) into sub-slots (as examples of partitions of TTIs) is determined.

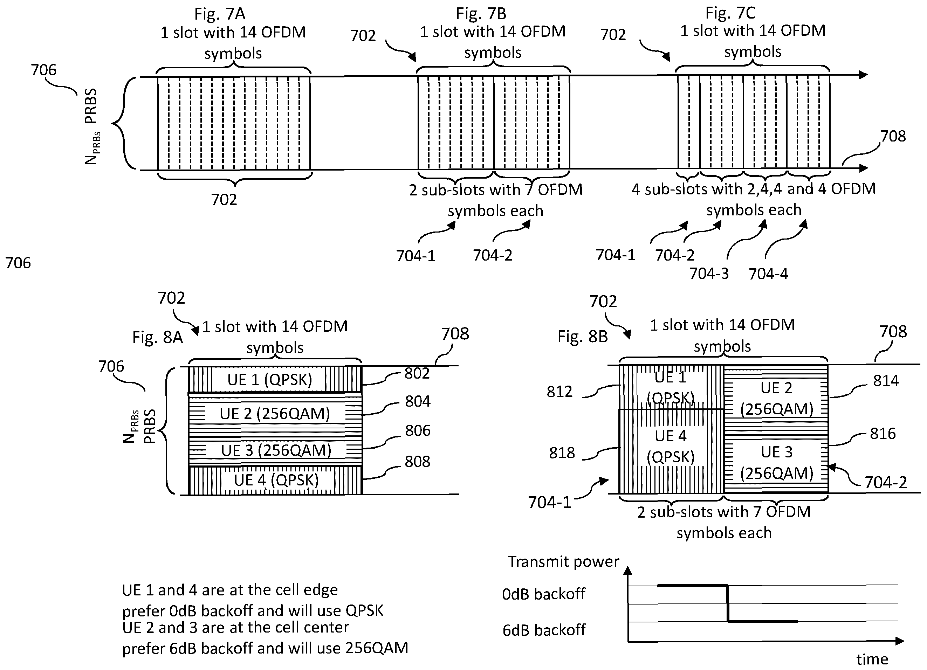

A slot of 14 OFDM symbols may be partitioned in several different ways as is illustrated in Figs. 7A, 7B and 7C. A sub-slot herein denotes a set of consecutive OFDM symbols, in particular within a slot. In Figs. 7A, 7B and 7C, at reference sign 708 time is depicted, and at reference sign 706, frequencies (and/or subcarriers) are shown as a number N_{PBRs} of PRBs.

Fig. 7A shows a slot 702 of 14 OFDM symbols without partitioning into sub-slots (also denoted as "partitioning a slot into a single sub-slot").

According to a (in particular basic) embodiment, the number of sub-slots is selected to be the same as the number of DL transmit power levels, e.g., as determined at reference sign 202, so that radio devices (e.g., users) with all different preferred backoffs may be scheduled in the same slot.

According to another preferred embodiment, the partitioning may be done dynamically for each slot. The scheduler 100 may examine the buffer status and/or priorities of all the radio devices (e.g., users) 506 served by the base station (e.g., gNB) 502 and choose a partitioning accordingly, e.g., into one sub-slot if all pending transmission have the same preferred backoff, as exemplified in Fig. 7A. Alternatively or in addition, slightly more advanced schemes may consider the relative frequencies (and/or relative priorities) of, e.g., all, pending transmissions to decide on a partitioning.

Fig. 7B shows an example of partitioning a slot (as an example of the TTI) 702 into two sub-slots (as an example of two partitions of the TTI) 704-1; 704-2. In the example of Fig. 7B, each of the two sub-slots comprises 7 OFDM symbols.

Fig. 7C shows another example of partitioning a slot (as an example of the TTI) 702 into four sub-slots (as an example of four partitions of the TTI) 704-1; 704-2; 704-3; 704-4. In the example of Fig. 7C, the first sub-slot 704-1 comprises two OFDM symbols, and the remaining three sub-slots 704-2; 704-3; 704-4 each comprise four OFDM symbols.

According to an embodiment, the first few symbols (e.g., of a slot as an example of the TTI, and/or of a sub-slot as an example of a partition of the TTI) may be reserved for control signaling. Alternatively or in addition, the rest of the symbols may be partitioned into sub-slots and used for data transmissions.

According to a further embodiment, the maximum DL transmit power level is used for the symbols reserved for control signaling.

According to a further embodiment, the number of sub-slots may always be set to one (and/or no partitioning of the slot) or two.

According to a still further embodiment, the DL transmit power levels for the different sub-slots may be set as part of the partitioning. Alternatively or in addition, the steps at reference signs 202 and 204 may be combined.

At reference sign 210 in Fig. 6, to each sub-slot (as an example of a partition of the TTI), radio devices (e.g., users) with the same DL transmit power level may be allocated. The scheduler 100 may have a queue with data packets that await transmission (and/or that need to be transmitted). The queued data packets may include unicast data intended for specific radio devices as receivers (e.g. UEs). Alternatively or in addition, the queued data packets may include multicast data intended for several radio devices as receivers, e.g., system information (SI) that needs to be broadcast.

Associated with each data (e.g., data packet), there may be a predetermined metric that the scheduler 100 may use to prioritize which data (e.g., data packet) is to be transmitted first. The predetermined metric can comprise, e.g., a priority from higher layers, and/or rules such as prioritizing retransmissions. Alternatively or in addition, the predetermined metric may include a queueing time, and/or a channel quality, e.g., in terms of expected data rate divided by the average served data rate so that that high priority is given when the channel is relatively good.

According to an embodiment, the scheduler may allocate radio resources to the sub-slots, and may do so by starting with one of the radio devices (e.g., users and/or receivers), and/or one of the data packets, in particular preferably the one with the highest priority.

The radio device (e.g., receiver) may determine the power backoff to be used for the sub-slot. After having allocated radio resource to the radio device (e.g., receiver), the scheduler 100 may allocate radio resource to the next radio device (e.g., the next receiver), e.g., the next radio device which has the highest priority among the radio devices (e.g., receivers) with the same preferred DL transmit power level.

When there are no radio resources left in the sub-slots, the scheduler 100 may take on the next sub-slot in the same way. E.g., a first radio device (e.g., receiver) scheduled in a sub-slot may determine the DL transmit power level of the sub-slot (e.g., a first radio device among a plurality of radio devices may determine the DL transmit power level of a first sub-slot, and a second radio device among the plurality of radio devices may determine the DL transmit power level of the second sub-slot). Depending on the queue, the DL transmit power level a sub-slot may be the same as, or different from, the previous sub-slot.

According to another embodiment, the scheduler 100 considers all the DL transmit power levels as different hypotheses. For each DL transmit power level, the scheduler 100 hypothetically assigns radio resources to radio devices (e.g., users) in the queue which have the corresponding preferred DL transmit power level. The scheduler 100 may evaluate a reward function, e.g., associated with all the radio devices (e.g., receivers) allocated in the sub-slot. The reward function may be, or may comprise, the sum of the predetermined metrics associated with the different radio devices (e.g., receivers). Alternatively or in addition, the reward function may be, or may comprise, a sum of the total number of transmitted bits, e.g., that are expected to be correctly received (e.g., estimates based on the channel quality reports), and/or the negative queueing time. The scheduler may then select the DL transmit power level and schedule according to the highest reward, and/or by maximizing the reward function.

In some sub-slots (and/or partitions of the TTI), there may be a need to transmit signals for synchronization, system information (SI), and/or for CSI feedback. According to an embodiment, such signals may be configured to use the minimum backoff, and/or be so important that the DL transmit power level in the corresponding sub-slot (and/or the corresponding partition of the TTI, e.g., for the resource elements not occupied by the signals) is set (e.g., forced) to have the minimum backoff.

According to another embodiment, a (e.g., non-minimal) power backoff may be allowed also in symbols containing system-critical signals and/or system-critical channels. To avoid introducing a varying DL transmit power level on system-critical signals and/or system-critical channels, the DL transmit power level of some signals may be forced to remain constant even as the power backoff changes the DL transmit power level on other less system-critical signals and/or system-critical channels. If there is only a small number of truly system-critical channels and/or system-critical signals (e.g., SSB transmissions), and/or if the system-critical channels and/or system-critical signals utilize only a small part of a (e.g., total) bandwidth, the impact of enforcing a constant DL transmit power level of the system-critical channels and/or system-critical signals may be minor, and hence may be tolerated. E.g., in the case of SSB transmissions, conventionally there is anyway by design a large distortion tolerance.

Alternatively or in addition, it may be necessary to transmit a signal with a predetermined backoff in a sub-slot with a lower backoff (and/or a higher D transmit power) causing more distortion than optimal. In that case, a link adaptation step (e.g., following after steps performed by the scheduler 100) may adapt the transmission (e.g., reduce the modulation order, the channel coding rate, and/or the number of, in particular MIMO, layers) so that the higher level of distortions can be tolerated.

At reference signs 212-1; 212-2 in Fig. 6, data are transmitted to the radio devices (e.g., users) allocated with the preferred DL transmit power levels. After the sub-slots have been scheduled (e.g., according to the step 210), data is transmitted accordingly. The steps 212-1; 212-2 of transmitting the data may comprise, e.g., channel coding, modulation, precoding, mapping to resource elements, and/or insertions of demodulation reference signals (DMRS). The steps 212-1; 212-2 of transmitting the data may also comprise the generation and transmission of control signaling to inform the radio devices (e.g., receivers) that data has been scheduled for them.

In one embodiment, the control signaling is transmitted once per slot (and/or once per TTI). In another embodiment, the control signaling is transmitted once per sub-slot (and/or once per partition of the TTI).

Figs. 8A and 8B show examples of data transmissions to multiple radio devices (e.g., UEs). In Figs. 8A and 8B, control signaling (e.g., DCI on PDCCH) is not shown (and/or not included) for simplicity of the illustration.

By the illustrative principle in Fig. 8A, radio devices (e.g., users) are conventionally scheduled (e.g., radio resources are allocated) within a slot 702 neglecting distortions. E.g., a first radio device (UE1) may be scheduled using QPSK with PRBs 802 in a high frequency range, a second radio device (UE2) may be scheduled using 256-QAM with PRBs 804 in a frequency range below that of the first radio device (UE1). A third radio device (UE3) may be scheduled using 256-QAM with PRBs 806 in a frequency range below that of the second radio device (UE2), and a fourth radio device (UE4) may be scheduled using QPSK with PBRs 808 in a low frequency range.

By contrast, according the illustrative principle in Fig. 8B, radio devices (e.g., users) are scheduled (e.g., radio resources are allocated) according to the inventive concept based on the same preferred backoff (and/or the same preferred DL transmit power level) in the same partition (e.g., sub-slot) 704-1; 704-2, and/or in the same set of consecutive OFDM symbols. E.g., the first radio device (UE1) and the fourth radio device (UE4) may both be scheduled using QPSK with the same DL transmit power level (or the same backoff 302-1) in the first partition 704-1 on the PRBs 812 and 818, respectively. The second radio device (UE2) and the third radio device (UE3) may both be scheduled using 256-QAM with the same DL transmit power level (or the same backoff 302-2) in the second partition 704-2 on the PRBs 814 and 816, respectively.

In the above embodiments, a slot has been chosen as (e.g., unit of) a TTI.

According to an alternative embodiment, a TTI (also denoted as scheduling interval) may comprise multiple slots. Alternatively or in addition, instead of partitioning each slot into sub-slots, one may consider concatenating several time slots into a super-slot, with duration also referred to as scheduling time interval. Then scheduler 100 may proceed according to the exemplary embodiment of the method 200, the difference being that each partition of a TTI corresponds to a slot. The scheduler 100 hence effectively considers multiple slots as a TTI. An advantage of concatenating slots into a super-slot (e.g., as a TTI) is that data to each radio device (e.g., user) may be transmitted in a full slot, which can sometimes be more efficient.

The use if super-slots as TTIs may correspond to partitioning a slot into one sub-slot, e.g., according to Fig. 7A.

According to an embodiment, two DL transmit power levels may be used in every slot (and/or every TTI). E.g., the set of preferred DL transmit power levels in step 202 (and/or the following steps 208-1; 208-2) may be determined for every slot (and/or every TTI). E.g., for a certain slot (and/or TTI), there may be four radio devices (e.g., terminals) which have preferred DL transmit power levels corresponding to QPSK, 16QAM, 64QAM and 256QAM respectively as follows:
- UE 1- QPSK;
- UE2 - 64QAM;
- UE3 - 256QAM;
- UE 4 - 16QAM.

According to an embodiment, it may be assumed that it has been determined to have two sub-slots (and/or two partitions of the TTI). The radio devices (e.g., users) may be grouped in two groups such that all the DL transmit power levels in the first group are greater than the DL transmit power levels of the radio devices (e.g., users) in the second group. For each group, the same (e.g., the lowest) preferred DL transmit power level within the group may be assigned to all the radio devices (e.g., UEs) in that group.

E.g., in the case of the first radio device (UE1) with QPSK, the second radio device (UE2) with 64-QAM, the third radio device (UE3) with 256-QAM and the fourth radio device (UE4) with 16-QAM, the first radio device (UE1) and the fourth radio device (UE4) may be in the first group, and the second radio device (UE2) and the third radio device (UE3) may be in the second group. It may e.g., be assumed that the first radio device (UE1) and the fourth radio device (UE4) have a preferred DL transmit power level corresponding to 16-QAM. It may further be assumed that the second radio device (UE2) and the third radio device (UE3) have a preferred DL transmit power level corresponding to 256-QAM.

According to some embodiments, the scheduler 100 may be implemented in a cloud RAN. Being implemented in a cloud RAN may require that the scheduler function in the cloud RAN informs the distributed units in the field (e.g., the radio units comprising the power amplifiers) about the power backoffs that may be used in each partition of a TTI, each TTI, each OFDM symbol, each sub-slot, and/or each slot. Thereby, it is required to add from the cloud RAN scheduler provisions to the distributed radio units about suitable backoff settings.

According to some embodiments, the cloud RAN scheduler 100 may request a capability indication from the radio unit, e.g., may ask for information related to what power backoff settings the radio unit can use.

According to another embodiment, the cloud RAN scheduler 100 may be informed by the radio unit (e.g. during network initialization and/or configuration) about power backoff settings the cloud RAN scheduler 100 may use when scheduling radio devices (e.g., users).

According to a further embodiment, a management function of the network (e.g., an OSS) may inform the cloud RAN scheduler 100 about the power backoff capabilities of the radio units that the cloud RAN scheduler 100 schedules traffic for.

According to another embodiment, an ORAN configuration may be provided. The ORAN configuration may be analogous and/or similar to a cloud RAN configuration. In an ORAN configuration, the information exchange (e.g., configurations, capabilities, and/or dynamic power backoff settings) between the ORAN scheduler 100 (and/or O-CU) and the ORAN radio unit (or O-DU) may need to be standardized.

As an extension of the method 200, the step 210 of grouping radio devices may be generalized to groupings of data packets awaiting transmission in a DL buffer. E.g., data packets may be assigned priorities (e.g., at higher layers of the protocol stack), and depending on the priority the DL transmit power level may be selected per data packet.

According to the extension of the method 200 of grouping data packets instead of radio devices, a radio device may receive a first data packet (e.g., having a high priority) in a first partition of the TTI with a first (e.g., high) DL transmit power level. The radio device may receive a second data packet (e.g., having a low priority) in a second partition of the TTI with a second (e.g., low) DL transmit power level.

Further steps and/or features of the method 200 may be generalized accordingly by replacing groups of radio devices by groups of data packets.

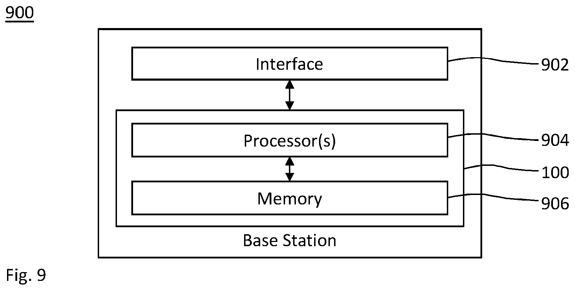

Fig. 9 shows a schematic block diagram for an embodiment of the scheduler 100. The scheduler 100 comprises processing circuitry, e.g., one or more processors 904 for performing the method 200 and memory 906 coupled to the processors 904. For example, the memory 906 may be encoded with instructions that implement at least one of the modules 210, 212-1 and 212-2, and optionally further the modules 202, 204, 206-1, 206-2, 208-1 and 208-2.

The one or more processors 904 may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the scheduler 100, such as the memory 906, scheduling functionality. For example, the one or more processors 904 may execute instructions stored in the memory 906. Such functionality may include providing various features and steps discussed herein, including any of the benefits disclosed herein. The expression "the device being operative to perform an action" may denote the scheduler 100 being configured to perform the action.

As schematically illustrated in Fig. 9, the scheduler 100 may be embodied by a base station 900, e.g., for performing the DL transmissions. The base station 900 comprises a radio interface 902 coupled to the scheduler 100 for radio communication with one or more radio devices (also denoted as UEs), e.g., for receiving the DL transmissions. The base station 900 may correspond to any one of the base stations 502, and/or the one or more radio devices may correspond to any one of the UEs 506.

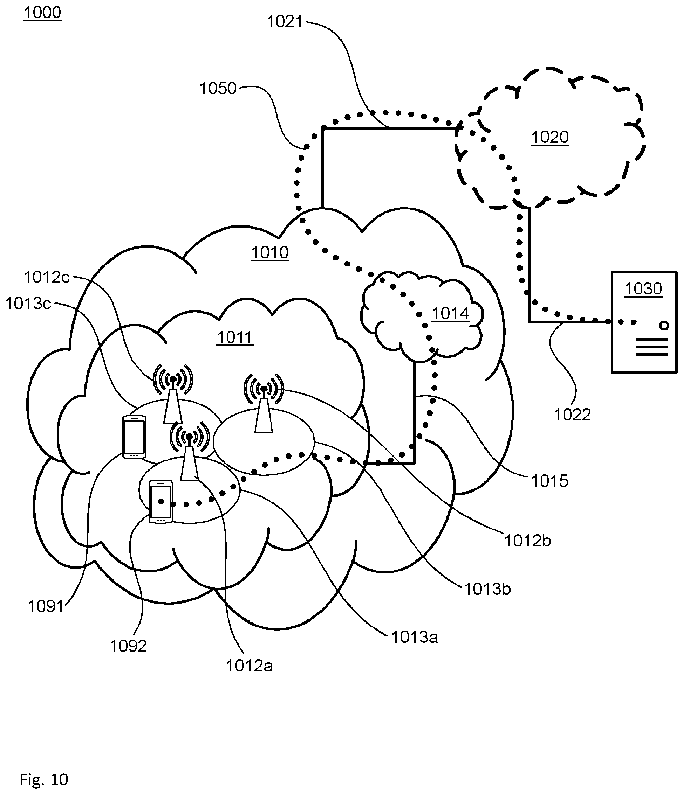

With reference to Fig. 10, in accordance with an embodiment, a communication system 1000 includes a telecommunication network 1010, such as a 3GPP-type cellular network, which comprises an access network 1011, such as a radio access network, and a core network 1014. The access network 1011 comprises a plurality of base stations 1012a, 1012b, 1012c, such as NBs, eNBs, gNBs or other types of wireless access points, each defining a corresponding coverage area 1013a, 1013b, 1013c. Each base station 1012a, 1012b, 1012c is connectable to the core network 1014 over a wired or wireless connection 1015. A first user equipment (UE) 1091 located in coverage area 1013c is configured to wirelessly connect to, or be paged by, the corresponding base station 1012c. A second UE 1092 in coverage area 1013a is wirelessly connectable to the corresponding base station 1012a. While a plurality of UEs 1091, 1092 are illustrated in this example, the disclosed embodiments are equally applicable to a situation where a sole UE is in the coverage area or where a sole UE is connecting to the corresponding base station 1012.

Any of the base stations 1012 may embody the scheduler 100 and/or any one of the base stations 502. Alternatively or in addition, any one of the UEs 1091, 1092 may embody any one of the radio devices 506.

The telecommunication network 1010 is itself connected to a host computer 1030, which may be embodied in the hardware and/or software of a standalone server, a cloud-implemented server, a distributed server or as processing resources in a server farm. The host computer 1030 may be under the ownership or control of a service provider, or may be operated by the service provider or on behalf of the service provider. The connections 1021, 1022 between the telecommunication network 1010 and the host computer 1030 may extend directly from the core network 1014 to the host computer 1030 or may go via an optional intermediate network 1020. The intermediate network 1020 may be one of, or a combination of more than one of, a public, private or hosted network; the intermediate network 1020, if any, may be a backbone network or the Internet; in particular, the intermediate network 1020 may comprise two or more sub-networks (not shown).

The communication system 1000 of Fig. 10 as a whole enables connectivity between one of the connected UEs 1091, 1092 and the host computer 1030. The connectivity may be described as an over-the-top (OTT) connection 1050. The host computer 1030 and the connected UEs 1091, 1092 are configured to communicate data and/or signaling via the OTT connection 1050, using the access network 1011, the core network 1014, any intermediate network 1020 and possible further infrastructure (not shown) as intermediaries. The OTT connection 1050 may be transparent in the sense that the participating communication devices through which the OTT connection 1050 passes are unaware of routing of uplink and downlink communications. For example, a base station 1012 need not be informed about the past routing of an incoming downlink communication with data originating from a host computer 1030 to be forwarded (e.g., handed over) to a connected UE 1091. Similarly, the base station 1012 need not be aware of the future routing of an outgoing uplink communication originating from the UE 1091 towards the host computer 1030.

By virtue of the method 200 being performed by any one of the base stations 1012, the performance or range of the OTT connection 1050 can be improved, e.g., in terms of increased throughput and/or reduced latency. More specifically, the host computer 1030 may, e.g., indicate to the a scheduler of the access network 1011 (e.g., embodying the RAN) a priority of any one of the radio devices, in particular the at least one first radio device and the at least one second radio device, and/or the priority of data to be transmitted to any one of the radio devices. Alternatively or in addition, any one of the base stations 1012 may embody the scheduler 100 and/or perform the method 200.

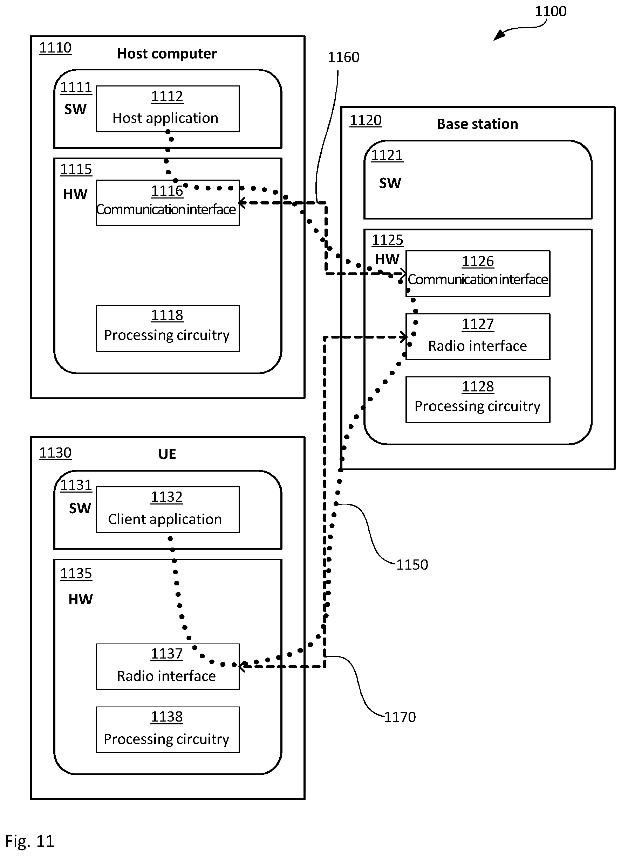

Example implementations, in accordance with an embodiment of the UE (e.g., radio device 506), base station (e.g., base station, in particular gNB, 502) and host computer discussed in the preceding paragraphs, will now be described with reference to Fig. 11. In a communication system 1100, a host computer 1110 comprises hardware 1115 including a communication interface 1116 configured to set up and maintain a wired or wireless connection with an interface of a different communication device of the communication system 1100. The host computer 1110 further comprises processing circuitry 1118, which may have storage and/or processing capabilities. In particular, the processing circuitry 1118 may comprise one or more programmable processors, application-specific integrated circuits, field programmable gate arrays or combinations of these (not shown) adapted to execute instructions. The host computer 1110 further comprises software 1111, which is stored in or accessible by the host computer 1110 and executable by the processing circuitry 1118. The software 1111 includes a host application 1112. The host application 1112 may be operable to provide a service to a remote user, such as a UE 1130 connecting via an OTT connection 1150 terminating at the UE 1130 and the host computer 1110. In providing the service to the remote user, the host application 1112 may provide user data (briefly: data), which is transmitted using the OTT connection 1150. The user data (briefly: data) may depend on the location of the UE 1130. The user data (briefly: data) may comprise auxiliary information or precision advertisements (also: ads) delivered to the UE 1130. The location may be reported by the UE 1130 to the host computer, e.g., using the OTT connection 1150, and/or by the base station 1120, e.g., using a connection 1160.

The communication system 1100 further includes a base station 1120 (e.g., embodying the scheduler 100 according to some embodiments) provided in a telecommunication system and comprising hardware 1125 enabling it to communicate with the host computer 1110 and with the UE 1130. The hardware 1125 may include a communication interface 1126 for setting up and maintaining a wired or wireless connection with an interface of a different communication device (e.g., with a cloud-based scheduler 100 according to some embodiments) of the communication system 1100, as well as a radio interface 1127 for setting up and maintaining at least a wireless connection 1170 with a UE 1130 located in a coverage area (not shown in Fig. 11) served by the base station 1120. The communication interface 1126 may be configured to facilitate a connection 1160 to the host computer 1110. The connection 1160 may be direct, or it may pass through a core network (not shown in Fig. 11) of the telecommunication system and/or through one or more intermediate networks outside the telecommunication system. In the embodiment shown, the hardware 1125 of the base station 1120 further includes processing circuitry 1128, which may comprise one or more programmable processors, application-specific integrated circuits, field programmable gate arrays or combinations of these (not shown) adapted to execute instructions. The base station 1120 further has software 1121 stored internally or accessible via an external connection.

The communication system 1100 further includes the UE 1130 already referred to. Its hardware 1135 may include a radio interface 1137 configured to set up and maintain a wireless connection 1170 with a base station serving a coverage area in which the UE 1130 is currently located. The hardware 1135 of the UE 1130 further includes processing circuitry 1138, which may comprise one or more programmable processors, application-specific integrated circuits, field programmable gate arrays or combinations of these (not shown) adapted to execute instructions. The UE 1130 further comprises software 1131, which is stored in or accessible by the UE 1130 and executable by the processing circuitry 1138. The software 1131 includes a client application 1132. The client application 1132 may be operable to provide a service to a human or non-human user via the UE 1130, with the support of the host computer 1110. In the host computer 1110, an executing host application 1112 may communicate with the executing client application 1132 via the OTT connection 1150 terminating at the UE 1130 and the host computer 1110. In providing the service to the user, the client application 1132 may receive request data from the host application 1112 and provide user data (briefly: data) in response to the request data. The OTT connection 1150 may transfer both the request data and the user data (briefly: data). The client application 1132 may interact with the user to generate the user data (briefly: data) that it provides.

It is noted that the host computer 1110, base station 1120 and UE 1130 illustrated in Fig. 11 may be identical to the host computer 1030, one of the base stations 1012a, 1012b, 1012c and one of the UEs 1091, 1092 of Fig. 10, respectively. This is to say, the inner workings of these entities may be as shown in Fig. 11, and, independently, the surrounding network topology may be that of Fig. 10.

In Fig. 11, the OTT connection 1150 has been drawn abstractly to illustrate the communication between the host computer 1110 and the UE 1130 via the base station 1120, without explicit reference to any intermediary devices and the precise routing of messages via these devices. Network infrastructure may determine the routing, which it may be configured to hide from the UE 1130 or from the service provider operating the host computer 1110, or both. While the OTT connection 1150 is active, the network infrastructure may further take decisions by which it dynamically changes the routing (e.g., on the basis of load balancing consideration or reconfiguration of the network). E.g., the scheduler 100 may be configured to perform the dynamical change in the routing before, or comprised in, the steps of initiating the transmissions to the at least one first radio device and to the at least one second radio device.

The wireless connection 1170 between the UE 1130 and the base station 1120 is in accordance with the teachings of the embodiments described throughout this disclosure. One or more of the various embodiments improve the performance of OTT services provided to the UE 1130 using the OTT connection 1150, in which the wireless connection 1170 forms the last segment. More precisely, the teachings of these embodiments may reduce the latency and improve the data rate and thereby provide benefits such as better responsiveness and improved QoS.

A measurement procedure may be provided for the purpose of monitoring data rate, latency, QoS and other factors on which the one or more embodiments improve. There may further be an optional network functionality for reconfiguring the OTT connection 1150 between the host computer 1110 and UE 1130, in response to variations in the measurement results. The measurement procedure and/or the network functionality for reconfiguring the OTT connection 1150 may be implemented in the software 1111 of the host computer 1110 or in the software 1131 of the UE 1130, or both. In embodiments, sensors (not shown) may be deployed in or in association with communication devices through which the OTT connection 1150 passes; the sensors may participate in the measurement procedure by supplying values of the monitored quantities exemplified above, or supplying values of other physical quantities from which software 1111, 1131 may compute or estimate the monitored quantities. The reconfiguring of the OTT connection 1150 may include message format, retransmission settings, preferred routing etc.; the reconfiguring need not affect the base station 1120, and it may be unknown or imperceptible to the base station 1120. Such procedures and functionalities may be known and practiced in the art. In certain embodiments, measurements may involve proprietary UE signaling facilitating the host computer's 1110 measurements of throughput, propagation times, latency and the like. The measurements may be implemented in that the software 1111, 1131 causes messages to be transmitted, in particular empty or "dummy" messages, using the OTT connection 1150 while it monitors propagation times, errors etc.

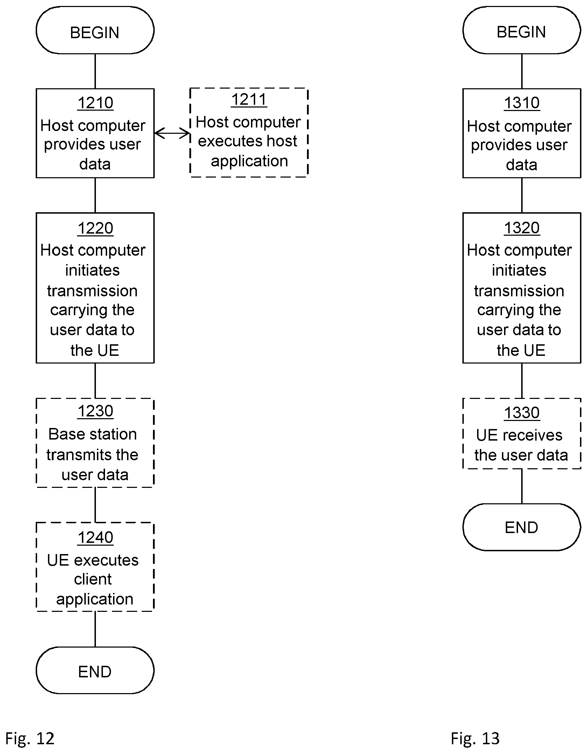

Fig. 12 is a flowchart illustrating a method implemented in a communication system, in accordance with one embodiment. The communication system includes a host computer, a base station (e.g., embodying the scheduler 100 according to some embodiments, or communicating with a cloud-based scheduler 100 according to some further embodiments, and/or embodying the base station, in particular gNB, 502) and a UE (e.g., embodying any one of the radio devices 506) which may be those described with reference to Figs. 10 and 11. For simplicity of the present disclosure, only drawing references to Fig. 12 will be included in this paragraph. In a first step 1210 of the method, the host computer provides user data (briefly: data). In an optional substep 1211 of the first step 1210, the host computer provides the user data (briefly: data) by executing a host application. In a second step 1220, the host computer initiates a transmission carrying the user data (briefly: data) to the UE. In an optional third step 1230, the base station transmits to the UE the user data (briefly: data) which was carried in the transmission that the host computer initiated, in accordance with the teachings of the embodiments described throughout this disclosure (e.g., according to the transmitting step 212-1 and/or 212-2 of the method 200). In an optional fourth step 1240, the UE executes a client application associated with the host application executed by the host computer.

Fig. 13 is a flowchart illustrating a method implemented in a communication system, in accordance with one embodiment. The communication system includes a host computer, a base station (e.g., embodying the scheduler 100 according to some embodiments, or communicating with a cloud-based scheduler 100 according to some further embodiments, and/or embodying the base station, in particular gNB, 502) and a UE (e.g., embodying any one of the radio devices 506) which may be those described with reference to Figs. 10 and 11. For simplicity of the present disclosure, only drawing references to Fig. 13 will be included in this paragraph. In a first step 1310 of the method, the host computer provides user data (briefly: data). In an optional substep (not shown) the host computer provides the user data (briefly: data) by executing a host application. In a second step 1320, the host computer initiates a transmission carrying the user data (briefly: data) to the UE. The transmission may pass via the base station, in accordance with the teachings of the embodiments described throughout this disclosure (e.g., according to the transmitting step 212-1 and/or 212-2 of the method 200). In an optional third step 1330, the UE receives the user data (briefly: data) carried in the transmission.

As has become apparent from above description, at least some embodiments of the technique allow for operating a base station (also: network node) at reduced DL transmit power, leading to energy improvements at the level of the node equipment.

The method 200 allows to operate the radio unit and/or power amplifier of a base station with as high DL transmit power levels (and/or as low backoff) as possible without sacrificing high peak rates to cell center radio devices (e.g., users). Alternatively or in addition, there is no need to sacrifice cell center peak rates to support as good coverage as possible.

Partitioning a TTI (e.g., a NR slot) into partitions (e.g., sub-slots) allows for choosing DL transmit power levels with low, or lower than conventionally, impact on latency (e.g., as compared to choosing DL transmit power levels at a slot level).

Operating the power amplifiers (PAs) in a radio unit with full DL transmit power and as low power backoff as possible can result in increased efficiency when transmitting. Increased efficiency can reduce thermal losses and enable smaller and more lightweight products to be designed. Alternatively or in addition, given a size and/or weight constraint, the product (e.g., the PA) can be made more capable in terms of delivering high capacity and/or high user throughput.

Alternatively or in addition, the method 200 can result in lower average energy consumption due to increased efficiency when transmitting. Further alternatively or in addition, due to an increased data rate for the served radio devices (e.g., users), more time can be available for power saving sleep modes in the base station. Extending a time of a power saving sleep mode can reduce the operational cost for operators, and/or can reduce the environmental impact of the products (e.g., the PAs and/or base stations).

Many advantages of the present invention will be fully understood from the foregoing description, and it will be apparent that various changes may be made in the form, construction and arrangement of the units and devices without departing from the scope of the invention and/or without sacrificing all of its advantages. Since the invention can be varied in many ways, it will be recognized that the invention should be limited only by the scope of the following claims.

## Claims

1. A method (200) of downlink, DL, scheduling a plurality of radio devices (506) in a cell (504) of a radio access network, RAN, with a plurality of DL transmit power levels, the method (200) being performed by a scheduler (100) and comprising the steps of:
grouping (210) at least two radio devices (506) according to at least two different DL transmit power levels, wherein the grouping comprises allocating each of the at least two radio devices (506) to one of at least two non-empty and disjoint groups, wherein each group is associated with a different DL transmit power level;
transmitting (212-1) data to at least one first radio device (506) among the at least two radio devices (506) within a first partition (704-1) of a transmission time interval, TTI (702), wherein the first partition (704-1) of the TTI (702) is assigned a first DL transmit power level associated with a first group among the at least two non-empty and disjoint groups, wherein the first group comprises the at least one first radio device (506); and
transmitting (212-2) data to at least one second radio device (506) among the at least two radio devices (506) within a second partition (704-2) of the TTI (702), wherein the second partition (704-2) of the TTI (702) is assigned a second DL transmit power level associated with a second group among the at least two non-empty and disjoint groups, wherein the second group comprises the at least one second radio device (506);
wherein the second group differs from the first group and wherein the second DL transmit power level differs from the first DL transmit power level.

2. The method (200) of claim 1, further comprising at least one of the steps of:
determining (202) the plurality of DL transmit power levels;
determining (208-1) a DL transmit power level for the at least one first radio device (506);
determining (208-2) a DL transmit power level for the at least one second radio device (506); and/or
determining a DL transmit power level for each of the at least two radio devices (506);
determining (204) a partitioning of the TTI (702), wherein the partitioning of the TTI (702) at least comprises the first partition (704-1) of the TTI (702) and the second partition (704-2) of the TTI (702);
receiving (206-1) an indication of a channel quality from the at least one first radio device (506);
receiving (206-2) an indication of a channel quality from the at least one second radio device (506); and
receiving an indication of a channel quality from each of the at least two radio devices (506).

3. The method (200) of claim 2, wherein the first DL transmit power level, the second DL transmit power level, and/or the plurality of the DL transmit power levels is determined based on a DL channel quality of the at least one first radio device (506), the at least one second radio device (506), and/or all of the at least two radio devices (506), respectively or jointly; and/or
wherein the TTI (702) comprises a slot (702), and wherein the partition of the TTI (702) comprises a sub-slot (704-1; 704-2) of the slot;
wherein control information is transmitted with a predetermined one of the plurality of DL transmit power levels;
wherein control signaling is transmitted:
at the beginning of the TTI (702); and/or
at the beginning of the first partition (704-1) of the TTI (702) for scheduling the at least one first radio device (506), at the beginning of the second partition (704-2) of the TTI (702) for scheduling the at least one second radio device (506), and/or at the beginning of any partition of the TTI (702) for scheduling any radio device (506) for transmission in the partition of the TTI (702).

4. The method (200) of claim 2, wherein the indication of the channel quality comprises:
at least one channel state information, CSI, report;
at least one CSI interference measurement, CSI-IM;
at least one channel quality indicator, CQI;
at least one signal-to-noise-ratio, SNR, measurement; and/or
at least one signal-to-interference-and-noise-ratio, SINR, measurement;
wherein the indication of the channel quality is derived from the presence and/or absence of a feedback of a previous DL transmission to the respective radio device (506), wherein the previous DL transmission is prior in time to the step of grouping (210) and/or to the step of transmitting (212-1; 212-2) data to the respective radio device (506);
wherein the grouping (210) of the at least two radio devices (506) is modified by means of, and/or in response to, a link adaptation for any one of the at least two radio devices (506);
wherein the link adaptation comprises a change in at least one of:
a modulation order;
a channel coding; and
a number of multiple-input-multiple-output, MIMO, layers.

5. The method (200) of any one of claims 1 to 4, wherein the plurality of DL transmission power levels is static and/or constant over time and/or wherein a number of DL transmission power levels within the plurality of DL transmission power levels corresponds to a number of partitions of the TTI (702); or
wherein the plurality of DL transmission power levels is dynamic and/or changes over time and/or wherein a number of DL transmission power levels within the plurality of DL transmission power levels, and/or a transmission power of any one of the plurality of the DL transmission power levels, is selected based on a DL buffer status and/or based on priorities of the at least two radio devices (506);
wherein a buffer status associated with the first group is indicative of data exceeding a capability of being transmitted within the first partition (704-1) of the TTI (702), and wherein the data to be transmitted within the first partition (704-1) of the TTI (702) is selected according to a predetermined metric; wherein the predetermined metric comprises:
a priority assigned to a radio device (506) by the RAN;
a priority of the data assigned by a layer of a protocol stack;
a priority assigned to a retransmission;
a queueing time of the data; and/or
a or the channel quality.

6. The method (200) of claim 5, wherein if an amount of the data to be transmitted exceeds the resources within the first partition (704-1) of the TTI (702), the data for transmission in the first partition (704-1) of the TTI (702) are selected according a monotonously varying, in particular decreasing, order of the predetermined metric, and data not selected for transmission in the first partition (704-1) of the TTI (702) are postponed to one or more first partitions (704-1) of one or more later TTIs (702); and/or
wherein if an amount of the data to be transmitted exceeds the resources within the first partition (704-1) of the TTI (702), the data for transmission in the first partition (704-1) of the TTI (702) are selected according a monotonously varying, in particular decreasing, order of the predetermined metric, and data not selected for transmission in the first partition (704-1) of the TTI (702) are postponed to at least a second partition (704-2) of the TTI (702) with the first DL transmit power level, and wherein data to be transmitted with the second DL transmit power level, and/or any DL transmit power level different from the first DL transmit power level, are postponed to one or more later TTIs (702); and/or
wherein the first partition (704-1) of the TTI (702) is temporally prior to the second partition (704-2) of the TTI (702), and wherein the first DL transmit power is higher than the second DL transmit power.

7. The method (200) of any one of claims 1 to 6, wherein at least both the first DL transmit power level and the second DL transmit power level, or any one of the DL transmit power levels within the plurality of the DL transmit power levels, are assigned to transmission resources, and wherein an ordering of at least both the first partition (704-1) of the TTI (702) and the second partition (704-2) of the TTI (702), or any partition of the TTI (702), is determined based on a maximization of a reward function associated with at least both the first group and the second group, or any group;
wherein the reward function comprises:
a sum over predetermined metrics;
a sum over the predetermined metrics comprising one or more of the predetermined metrics of claim 5;
a sum over a total number of transmission resources, and/or a total number of bits, to be transmitted;
a sum over negative queueing times; and/or
an average of negative queueing times.

8. The method (200) of any one of claims 1 to 7, wherein the method (200) is performed by a scheduler; and/or
wherein further comprising the steps of:
sending a capability indication request to a radio unit concerning a capability of the radio unit of applying different DL transmit power levels within different partitions of a TTI; and
receiving a capability indication responsive to the capability indication request; wherein the plurality of DL transmit power levels is provided to the scheduler by a management function of the RAN.

9. A computer program product comprising program code portions for performing the steps of any one of the claims 1 to 8 when the computer program product is executed on one or more computing devices (904), stored on a computer-readable recording medium (906).

10. A scheduler (100) for downlink, DL, scheduling a plurality of radio devices (506) in a cell (504) of a radio access network, RAN, with a plurality of DL transmit power levels, the scheduler (100) configured to:
group at least two radio devices (506) according to at least two different DL transmit power levels, wherein the grouping comprises allocating each of the at least two radio devices (506) to one of at least two non-empty and disjoint groups, wherein each group is associated with a different DL transmit power level;
transmit data to at least one first radio device (506) among the at least two radio devices (506) within a first partition (704-1) of a transmission time interval, TTI (702), wherein the first partition (704-1) of the TTI (702) is assigned a first DL transmit power level associated with a first group among the at least two non-empty and disjoint groups, wherein the first group comprises the at least one first radio device (506); and
transmit data to at least one second radio device (506) among the at least two radio devices (506) within a second partition (704-2) of the TTI (702), wherein the second partition (704-2) of the TTI (702) is assigned a second DL transmit power level associated with a second group among the at least two non-empty and disjoint groups, wherein the second group comprises the at least one second radio device (506);
wherein the second group differs from the first group and wherein the second DL transmit power level differs from the first DL transmit power level.

11. The scheduler (100) of claim 10, further configured to perform the steps of, or comprise the features of, any one of claims 2 to 8.

12. A base station (502; 900; 1012; 1012a; 1012b; 1012c; 1120) for downlink, DL, scheduling a plurality of radio devices (506) in a cell (504) of a radio access network, RAN, with a plurality of DL transmit power levels, the base station (502; 900; 1012; 1012a; 1012b; 1012c; 1120) configured to:
group at least two radio devices (506) according to at least two different DL transmit power levels, wherein the grouping comprises allocating each of the at least two radio devices (506) to one of at least two non-empty and disjoint groups, wherein each group is associated with a different DL transmit power level;
transmit data to at least one first radio device (506) among the at least two radio devices (506) within a first partition (704-1) of a transmission time interval, TTI (702), wherein the first partition (704-1) of the TTI (702) is assigned a first DL transmit power level associated with a first group among the at least two non-empty and disjoint groups, wherein the first group comprises the at least one first radio device (506); and
transmit data to at least one second radio device (506) among the at least two radio devices (506) within a second partition (704-2) of the TTI (702), wherein the second partition (704-2) of the TTI (702) is assigned a second DL transmit power level associated with a second group among the at least two non-empty and disjoint groups, wherein the second group comprises the at least one second radio device (506);
wherein the second group differs from the first group and wherein the second DL transmit power level differs from the first DL transmit power level.

13. The base station (502; 900; 1012; 1012a; 1012b; 1012c; 1120) of claim 12, further configured to perform the steps of, or comprise the features of, any one of claims 2 to 8.

14. A communication system (1000; 1100) including:
a scheduler (100) for downlink, DL, scheduling a plurality of radio devices (506) in a cell (504) of a radio access network, RAN, with a plurality of DL transmit power levels, the scheduler (100) comprising processing circuitry (904), the processing circuitry (904) of the scheduler (100) being configured to execute the steps of any one of claims 1 to 8; and
a host computer (1030; 1110), the host computer (1030; 1110) comprising:
processing circuitry (1118) configured to provide user data; and
a communication interface (1116) configured to forward user data to a cellular or ad hoc radio network for transmission to a user equipment, UE (1091; 1092; 1130).

15. The communication system (1000; 1100) of claim 14, further including the UE (1091; 1092; 1130),
wherein the radio network (1010; 1011) further comprises a base station (502; 900; 1012; 1012a; 1012b; 1012c; 1120) configured to communicate with the UE (1091; 1092; 1130), wherein the base station (502; 900; 1012; 1012a; 1012b; 1012c; 1120) comprises the scheduler (100), wherein:
the processing circuitry (1118) of the host computer (1030; 1110) is configured to execute a host application (1112), thereby providing the user data; and
the processing circuitry (1138) of the UE (1091; 1092; 1130) is configured to execute a client application (1132) associated with the host application (1112).

## Patentansprüche

1. Ein Verfahren (200) zum Downlink-, DL-, Scheduling einer Vielzahl von Funkvorrichtungen (506) in einer Zelle (504) eines Funkzugangsnetzes, RAN, mit einer Vielzahl von DL-Sendeleistungspegeln, wobei das Verfahren (200) von einem Scheduler (100) durchgeführt wird und die folgenden Schritte beinhaltet:
Gruppieren (210) von mindestens zwei Funkvorrichtungen (506) gemäß mindestens zwei unterschiedlichen DL-Sendeleistungspegeln, wobei das Gruppieren das Zuordnen jeder der mindestens zwei Funkvorrichtungen (506) zu einer von mindestens zwei nicht leeren und disjunkten Gruppen beinhaltet, wobei jede Gruppe mit einem unterschiedlichen DL-Sendeleistungspegel assoziiert ist;
Senden (212-1) von Daten an mindestens eine erste Funkvorrichtung (506) unter den mindestens zwei Funkvorrichtungen (506) innerhalb einer ersten Partition (704-1) eines Sendezeitintervalls, TTI (702), wobei der ersten Partition (704-1) des TTI (702) ein erster DL-Sendeleistungspegel zugewiesen ist, der mit einer ersten Gruppe unter den mindestens zwei nicht leeren und disjunkten Gruppen assoziiert ist, wobei die erste Gruppe die mindestens eine erste Funkvorrichtung (506) beinhaltet; und
Senden (212-2) von Daten an mindestens eine zweite Funkvorrichtung (506) unter den mindestens zwei Funkvorrichtungen (506) innerhalb einer zweiten Partition (704-2) des TTI (702), wobei der zweiten Partition (704-2) des TTI (702) ein zweiter DL-Sendeleistungspegel zugewiesen ist, der mit einer zweiten Gruppe unter den mindestens zwei nicht leeren und disjunkten Gruppen assoziiert ist, wobei die zweite Gruppe die mindestens eine zweite Funkvorrichtung (506) beinhaltet;
wobei sich die zweite Gruppe von der ersten Gruppe unterscheidet und wobei sich der zweite DL-Sendeleistungspegel von dem ersten DL-Sendeleistungspegel unterscheidet.

2. Verfahren (200) gemäß Anspruch 1, das ferner mindestens einen der folgenden Schritte beinhaltet:
Bestimmen (202) der Vielzahl von DL-Sendeleistungspegeln;
Bestimmen (208-1) eines DL-Sendeleistungspegels für die mindestens eine erste Funkvorrichtung (506);
Bestimmen (208-2) eines DL-Sendeleistungspegels für die mindestens eine zweite Funkvorrichtung (506); und/oder
Bestimmen eines DL-Sendeleistungspegels für jede der mindestens zwei Funkvorrichtungen (506);
Bestimmen (204) einer Partitionierung des TTI (702), wobei die Partitionierung des TTI (702) mindestens die erste Partition (704-1) des TTI (702) und die zweite Partition (704-2) des TTI (702) beinhaltet;
Empfangen (206-1) einer Angabe einer Kanalqualität von der mindestens einen ersten Funkvorrichtung (506);
Empfangen (206-2) einer Angabe einer Kanalqualität von der mindestens einen zweiten Funkvorrichtung (506); und
Empfangen einer Angabe einer Kanalqualität von jeder der mindestens zwei Funkvorrichtungen (506).

3. Verfahren (200) gemäß Anspruch 2, wobei der erste DL-Sendeleistungspegel, der zweite DL-Sendeleistungspegel und/oder die Vielzahl der DL-Sendeleistungspegel basierend auf einer DL-Kanalqualität der mindestens einen ersten Funkvorrichtung (506), der mindestens einen zweiten Funkvorrichtung (506) und/oder aller der mindestens zwei Funkvorrichtungen (506) jeweils einzeln oder gemeinsam bestimmt wird; und/oder
wobei das TTI (702) einen Slot (702) beinhaltet und wobei die Partition des TTI (702) einen Teilslot (704-1; 704-2) des Slots beinhaltet;
wobei Steuerinformationen mit einem vorbestimmten einen der Vielzahl von DL-Sendeleistungspegeln gesendet werden;
wobei Steuersignalisierung wie folgt gesendet wird:
zu Beginn des TTI (702); und/oder
zu Beginn der ersten Partition (704-1) des TTI (702) zum Scheduling der mindestens einen ersten Funkvorrichtung (506), zu Beginn der zweiten Partition (704-2) des TTI (702) zum Scheduling der mindestens einen zweiten Funkvorrichtung (506) und/oder zu Beginn einer beliebigen Partition des TTI (702) zum Scheduling einer beliebigen Funkvorrichtung (506) zum Senden in der Partition des TTI (702).

4. Verfahren (200) gemäß Anspruch 2, wobei die Angabe der Kanalqualität Folgendes beinhaltet:
mindestens einen Kanalzustandsinformations-, CSI-, Bericht;
mindestens eine CSI-Interferenzmessung, CSI-IM;
mindestens einen Kanalqualitätsindikator, CQI;
mindestens eine Signal-Rausch-Verhältnis-, SNR-, Messung; und/oder
mindestens eine Signal-Interferenz-und-Rausch-Verhältnis-, SINR-, Messung;
wobei die Angabe der Kanalqualität aus dem Vorhandensein und/oder Nichtvorhandensein einer Rückmeldung einer vorherigen DL-Sendung an die jeweilige Funkvorrichtung (506) abgeleitet wird, wobei die vorherige DL-Sendung zeitlich vor dem Schritt des Gruppierens (210) und/oder dem Schritt des Sendens (212-1; 212-2) von Daten an die jeweilige Funkvorrichtung (506) liegt;
wobei das Gruppieren (210) der mindestens zwei Funkvorrichtungen (506) mittels und/oder als Reaktion auf eine Verbindungsanpassung für eine beliebige der mindestens zwei Funkvorrichtungen (506) modifiziert wird;
wobei die Verbindungsanpassung eine Änderung von mindestens einem von Folgendem beinhaltet:
einer Modulationsordnung;
einer Kanalcodierung; und
einer Anzahl von Multiple-Input-Multiple-Output-, MIMO-, Schichten.

5. Verfahren (200) gemäß einem der Ansprüche 1 bis 4, wobei die Vielzahl von DL-Sendeleistungspegeln im Zeitverlauf statisch und/oder konstant ist und/oder wobei eine Anzahl von DL-Sendeleistungspegeln innerhalb der Vielzahl von DL-Sendeleistungspegeln einer Anzahl von Partitionen des TTI (702) entspricht; oder
wobei die Vielzahl von DL-Sendeleistungspegeln im Zeitverlauf dynamisch ist und/oder sich ändert und/oder wobei eine Anzahl von DL-Sendeleistungspegeln innerhalb der Vielzahl von DL-Sendeleistungspegeln und/oder eine Sendeleistung eines beliebigen der Vielzahl von DL-Sendeleistungspegeln basierend auf einem DL-Pufferstatus und/oder basierend auf Prioritäten der mindestens zwei Funkvorrichtungen (506) ausgewählt wird;
wobei ein Pufferstatus, der mit der ersten Gruppe assoziiert ist, Daten angibt, die eine Fähigkeit überschreiten, innerhalb der ersten Partition (704-1) des TTI (702) gesendet zu werden, und wobei die Daten, die innerhalb der ersten Partition (704-1) des TTI (702) gesendet werden sollen, gemäß einer vorbestimmten Metrik ausgewählt werden;
wobei die vorbestimmte Metrik Folgendes beinhaltet:
eine Priorität, die einer Funkvorrichtung (506) durch das RAN zugewiesen wird;
eine Priorität der Daten, die durch eine Schicht eines Protokollstapels zugewiesen wird;
eine Priorität, die einer erneuten Sendung zugewiesen wird;
eine Warteschlangenzeit der Daten; und/oder
eine oder die Kanalqualität.

6. Verfahren (200) gemäß Anspruch 5, wobei, wenn eine Menge der zu sendenden Daten die Ressourcen innerhalb der ersten Partition (704-1) des TTI (702) überschreitet, die Daten zum Senden in der ersten Partition (704-1) des TTI (702) gemäß einer monoton variierenden, insbesondere abnehmenden Reihenfolge der vorbestimmten Metrik ausgewählt werden und Daten, die nicht zum Senden in der ersten Partition (704-1) des TTI (702) ausgewählt werden, auf eine oder mehrere erste Partitionen (704-1) eines oder mehrerer späterer TTIs (702) zurückgestellt werden; und/oder
wobei, wenn eine Menge der zu sendenden Daten die Ressourcen innerhalb der ersten Partition (704-1) des TTI (702) überschreitet, die Daten zum Senden in der ersten Partition (704-1) des TTI (702) gemäß einer monoton variierenden, insbesondere abnehmenden Reihenfolge der vorbestimmten Metrik ausgewählt werden und Daten, die nicht zum Senden in der ersten Partition (704-1) des TTI (702) ausgewählt werden, auf mindestens eine zweite Partition (704-2) des TTI (702) mit dem ersten DL-Sendeleistungspegel zurückgestellt werden und
wobei Daten, die mit dem zweiten DL-Sendeleistungspegel und/oder einem beliebigen DL-Sendeleistungspegel, der sich von dem ersten DL-Sendeleistungspegel unterscheidet, zu senden sind, auf ein oder mehrere spätere TTIs (702) zurückgestellt werden; und/oder
wobei die erste Partition (704-1) des TTI (702) zeitlich vor der zweiten Partition (704-2) des TTI (702) liegt und wobei die erste DL-Sendeleistung höher als die zweite DL-Sendeleistung ist.

7. Verfahren (200) gemäß einem der Ansprüche 1 bis 6, wobei mindestens sowohl der erste DL-Sendeleistungspegel als auch der zweite DL-Sendeleistungspegel oder ein beliebiger der DL-Sendeleistungspegel innerhalb der Vielzahl der DL-Sendeleistungspegel Senderessourcen zugewiesen werden und wobei eine Abfolge von mindestens sowohl der ersten Partition (704-1) des TTI (702) als auch der zweiten Partition (704-2) des TTI (702) oder einer beliebigen Partition des TTI (702) basierend auf einer Maximierung einer Belohnungsfunktion, die mit mindestens sowohl der ersten Gruppe als auch der zweiten Gruppe oder einer beliebigen Gruppe assoziiert ist, bestimmt wird;
wobei die Belohnungsfunktion Folgendes beinhaltet:
eine Summe über vorbestimmte Metriken;
eine Summe über die vorbestimmten Metriken, die eine oder mehrere der vorbestimmten Metriken gemäß Anspruch 5 beinhalten;
eine Summe über eine Gesamtanzahl von Senderessourcen und/oder eine Gesamtanzahl von Bits, die gesendet werden sollen;
eine Summe über negative Warteschlangenzeiten; und/oder einen Durchschnitt von negativen Warteschlangenzeiten.

8. Verfahren (200) gemäß einem der Ansprüche 1 bis 7, wobei das Verfahren (200) von einem Scheduler durchgeführt wird; und/oder
wobei das Verfahren ferner die folgenden Schritte beinhaltet:
Übermitteln einer Fähigkeitsangabeanforderung an eine Funkeinheit, die eine Fähigkeit der Funkeinheit zum Anwenden unterschiedlicher DL-Sendeleistungspegel innerhalb unterschiedlicher Partitionen eines TTI betrifft; und
Empfangen einer Fähigkeitsangabe als Reaktion auf die Fähigkeitsangabeanforderung;
wobei die Vielzahl von DL-Sendeleistungspegeln dem Scheduler durch eine Verwaltungsfunktion des RAN bereitgestellt wird.

9. Ein Computerprogrammprodukt, das Programmcodeabschnitte zum Durchführen der Schritte gemäß einem der Ansprüche 1 bis 8 beinhaltet, wenn das Computerprogrammprodukt auf einer oder mehreren Computervorrichtungen (904) ausgeführt wird, das auf einem computerlesbaren Aufzeichnungsmedium (906) gespeichert ist.

10. Ein Scheduler (100) zum Downlink-, DL-, Scheduling einer Vielzahl von Funkvorrichtungen (506) in einer Zelle (504) eines Funkzugangsnetzes, RAN, mit einer Vielzahl von DL-Sendeleistungspegeln, wobei der Scheduler (100) für Folgendes konfiguriert ist:
Gruppieren von mindestens zwei Funkvorrichtungen (506) gemäß mindestens zwei unterschiedlichen DL-Sendeleistungspegeln, wobei das Gruppieren das Zuordnen jeder der mindestens zwei Funkvorrichtungen (506) zu einer von mindestens zwei nicht leeren und disjunkten Gruppen beinhaltet, wobei jede Gruppe mit einem unterschiedlichen DL-Sendeleistungspegel assoziiert ist;
Senden von Daten an mindestens eine erste Funkvorrichtung (506) unter den mindestens zwei Funkvorrichtungen (506) innerhalb einer ersten Partition (704-1) eines Sendezeitintervalls, TTI (702), wobei der ersten Partition (704-1) des TTI (702) ein erster DL-Sendeleistungspegel zugewiesen ist, der mit einer ersten Gruppe unter den mindestens zwei nicht leeren und disjunkten Gruppen assoziiert ist, wobei die erste Gruppe die mindestens eine erste Funkvorrichtung (506) beinhaltet; und
Senden von Daten an mindestens eine zweite Funkvorrichtung (506) unter den mindestens zwei Funkvorrichtungen (506) innerhalb einer zweiten Partition (704-2) des TTI (702), wobei der zweiten Partition (704-2) des TTI (702) ein zweiter DL-Sendeleistungspegel zugewiesen ist, der mit einer zweiten Gruppe unter den mindestens zwei nicht leeren und disjunkten Gruppen assoziiert ist, wobei die zweite Gruppe die mindestens eine zweite Funkvorrichtung (506) beinhaltet;
wobei sich die zweite Gruppe von der ersten Gruppe unterscheidet und wobei sich der zweite DL-Sendeleistungspegel von dem ersten DL-Sendeleistungspegel unterscheidet.

11. Scheduler (100) gemäß Anspruch 10, der ferner konfiguriert ist, um die Schritte gemäß einem der Ansprüche 2 bis 8 durchzuführen oder die Merkmale gemäß einem der Ansprüche 2 bis 8 zu beinhalten.

12. Eine Basisstation (502; 900; 1012; 1012a; 1012b; 1012c; 1120) zum Downlink-, DL-, Scheduling einer Vielzahl von Funkvorrichtungen (506) in einer Zelle (504) eines Funkzugangsnetzes, RAN, mit einer Vielzahl von DL-Sendeleistungspegeln, wobei die Basisstation (502; 900; 1012; 1012a; 1012b; 1012c; 1120) für Folgendes konfiguriert ist:
Gruppieren von mindestens zwei Funkvorrichtungen (506) gemäß mindestens zwei unterschiedlichen DL-Sendeleistungspegeln, wobei das Gruppieren das Zuordnen jeder der mindestens zwei Funkvorrichtungen (506) zu einer von mindestens zwei nicht leeren und disjunkten Gruppen beinhaltet, wobei jede Gruppe mit einem unterschiedlichen DL-Sendeleistungspegel assoziiert ist;
Senden von Daten an mindestens eine erste Funkvorrichtung (506) unter den mindestens zwei Funkvorrichtungen (506) innerhalb einer ersten Partition (704-1) eines Sendezeitintervalls, TTI (702), wobei der ersten Partition (704-1) des TTI (702) ein erster DL-Sendeleistungspegel zugewiesen ist, der mit einer ersten Gruppe unter den mindestens zwei nicht leeren und disjunkten Gruppen assoziiert ist, wobei die erste Gruppe die mindestens eine erste Funkvorrichtung (506) beinhaltet; und
Senden von Daten an mindestens eine zweite Funkvorrichtung (506) unter den mindestens zwei Funkvorrichtungen (506) innerhalb einer zweiten Partition (704-2) des TTI (702), wobei der zweiten Partition (704-2) des TTI (702) ein zweiter DL-Sendeleistungspegel zugewiesen ist, der mit einer zweiten Gruppe unter den mindestens zwei nicht leeren und disjunkten Gruppen assoziiert ist, wobei die zweite Gruppe die mindestens eine zweite Funkvorrichtung (506) beinhaltet;
wobei sich die zweite Gruppe von der ersten Gruppe unterscheidet und wobei sich der zweite DL-Sendeleistungspegel von dem ersten DL-Sendeleistungspegel unterscheidet.

13. Basisstation (502; 900; 1012; 1012a; 1012b; 1012c; 1120) gemäß Anspruch 12, die ferner konfiguriert ist, um die Schritte gemäß einem der Ansprüche 2 bis 8 durchzuführen oder die Merkmale gemäß einem der Ansprüche 2 bis 8 zu beinhalten.

14. Ein Kommunikationssystem (1000; 1100), das Folgendes umfasst:
einen Scheduler (100) zum Downlink-, DL-, Scheduling einer Vielzahl von Funkvorrichtungen (506) in einer Zelle (504) eines Funkzugangsnetzes, RAN, mit einer Vielzahl von DL-Sendeleistungspegeln, wobei der Scheduler (100) eine Verarbeitungsschaltung (904) beinhaltet, wobei die Verarbeitungsschaltung (904) des Schedulers (100) konfiguriert ist, um die Schritte gemäß einem der Ansprüche 1 bis 8 auszuführen; und
einen Host-Computer (1030; 1110), wobei der Host-Computer (1030; 1110) Folgendes beinhaltet:
eine Verarbeitungsschaltung (1118), die konfiguriert ist, um Benutzerdaten bereitzustellen; und
eine Kommunikationsschnittstelle (1116), die konfiguriert ist, um Benutzerdaten an ein zellulares oder Ad-hoc-Funknetz zum Senden an ein Benutzergerät, UE (1091; 1092; 1130), weiterzuleiten.

15. Kommunikationssystem (1000; 1100) gemäß Anspruch 14, das ferner das UE (1091; 1092; 1130) umfasst,
wobei das Funknetz (1010; 1011) ferner eine Basisstation (502; 900; 1012; 1012a; 1012b; 1012c; 1120) beinhaltet, die konfiguriert ist, um mit dem UE (1091; 1092; 1130) zu kommunizieren, wobei die Basisstation (502; 900; 1012; 1012a; 1012b; 1012c; 1120) den Scheduler (100) beinhaltet,
wobei:
die Verarbeitungsschaltung (1118) des Host-Computers (1030; 1110) konfiguriert ist, um eine Host-Anwendung (1112) auszuführen, wodurch die Benutzerdaten bereitgestellt werden; und
die Verarbeitungsschaltung (1138) des UE (1091; 1092; 1130) konfiguriert ist, um eine Client-Anwendung (1132) auszuführen, die mit der Host-Anwendung (1112) assoziiert ist.

## Revendications

1. Un procédé (200) de planification en liaison descendante, DL, d'une pluralité de dispositifs radio (506) dans une cellule (504) d'un réseau d'accès radio, RAN, avec une pluralité de niveaux de puissance de transmission DL, le procédé (200) étant réalisé par un planificateur (100) et comprenant les étapes :
de regroupement (210) d'au moins deux dispositifs radio (506) selon au moins deux niveaux de puissance de transmission DL différents, le regroupement comprenant l'allocation de chacun des au moins deux dispositifs radio (506) à l'un d'au moins deux groupes non vides et disjoints, chaque groupe étant associé à un niveau de puissance de transmission DL différent ;
de transmission (212-1) de données à au moins un premier dispositif radio (506) parmi les au moins deux dispositifs radio (506) au sein d'une première partition (704-1) d'un intervalle de temps de transmission, TTI (702), la première partition (704-1) du TTI (702) se voyant attribuer un premier niveau de puissance de transmission DL associé à un premier groupe parmi les au moins deux groupes non vides et disjoints, le premier groupe comprenant l'au moins un premier dispositif radio (506) ; et
de transmission (212-2) de données à au moins un deuxième dispositif radio (506) parmi les au moins deux dispositifs radio (506) au sein d'une deuxième partition (704-2) du TTI (702), la deuxième partition (704-2) du TTI (702) se voyant attribuer un deuxième niveau de puissance de transmission DL associé à un deuxième groupe parmi les au moins deux groupes non vides et disjoints, le deuxième groupe comprenant l'au moins un deuxième dispositif radio (506) ;
dans lequel le deuxième groupe diffère du premier groupe et dans lequel le deuxième niveau de puissance de transmission DL diffère du premier niveau de puissance de transmission DL.

2. Le procédé (200) de la revendication 1, comprenant en outre au moins l'une des étapes :
de détermination (202) de la pluralité de niveaux de puissance de transmission DL ;
de détermination (208-1) d'un niveau de puissance de transmission DL pour l'au moins un premier dispositif radio (506) ;
de détermination (208-2) d'un niveau de puissance de transmission DL pour l'au moins un deuxième dispositif radio (506) ; et/ou
de détermination d'un niveau de puissance de transmission DL pour chacun des au moins deux dispositifs radio (506) ;
de détermination (204) d'un partitionnement du TTI (702), le partitionnement du TTI (702) comprenant au moins la première partition (704-1) du TTI (702) et la deuxième partition (704-2) du TTI (702) ;
de réception (206-1) d'une indication d'une qualité de canal à partir de l'au moins un premier dispositif radio (506) ;
de réception (206-2) d'une indication d'une qualité de canal à partir de l'au moins un deuxième dispositif radio (506) ; et
de réception d'une indication d'une qualité de canal à partir de chacun des au moins deux dispositifs radio (506).

3. Le procédé (200) de la revendication 2, dans lequel le premier niveau de puissance de transmission DL, le deuxième niveau de puissance de transmission DL, et/ou la pluralité des niveaux de puissance de transmission DL sont déterminés sur la base d'une qualité de canal DL de l'au moins un premier dispositif radio (506), de l'au moins un deuxième dispositif radio (506), et/ou de la totalité des au moins deux dispositifs radio (506), respectivement ou conjointement ; et/ou
dans lequel le TTI (702) comprend un créneau (702), et dans lequel la partition du TTI (702) comprend un sous-créneau (704-1 ; 704-2) du créneau ;
dans lequel des informations de contrôle sont transmises avec un niveau prédéterminé de la pluralité de niveaux de puissance de transmission DL ;
dans lequel une signalisation de contrôle est transmise :
au début du TTI (702) ; et/ou
au début de la première partition (704-1) du TTI (702) pour planifier l'au moins un premier dispositif radio (506), au début de la deuxième partition (704-2) du TTI (702) pour planifier l'au moins un deuxième dispositif radio (506), et/ou au début de n'importe quelle partition du TTI (702) pour planifier n'importe quel dispositif radio (506) pour une transmission dans la partition du TTI (702).

4. Le procédé (200) de la revendication 2, dans lequel l'indication de la qualité de canal comprend :
au moins un rapport d'informations d'état de canal, CSI ;
au moins une mesure d'interférence CSI, CSI-IM ;
au moins un indicateur de qualité de canal, CQI ;
au moins une mesure de rapport signal sur bruit, SNR ; et/ou
au moins une mesure de rapport signal sur interférence plus bruit, SINR ;
dans lequel l'indication de la qualité de canal est dérivée de la présence et/ou de l'absence d'une rétroaction d'une transmission DL précédente au dispositif radio (506) respectif, la transmission DL précédente étant antérieure dans le temps à l'étape de regroupement (210) et/ou à l'étape de transmission (212-1 ; 212-2) de données au dispositif radio (506) respectif ;
dans lequel le regroupement (210) des au moins deux dispositifs radio (506) est modifié au moyen de, et/ou en réponse à, une adaptation de liaison pour l'un quelconque des au moins deux dispositifs radio (506) ;
dans lequel l'adaptation de liaison comprend un changement dans au moins l'un parmi :
un ordre de modulation ;
un codage de canal ; et
un nombre de couches à entrées multiples et sorties multiples, MIMO.

5. Le procédé (200) de l'une quelconque des revendications 1 à 4, dans lequel la pluralité de niveaux de puissance de transmission DL est statique et/ou constante dans le temps et/ou dans lequel un nombre de niveaux de puissance de transmission DL au sein de la pluralité de niveaux de puissance de transmission DL correspond à un nombre de partitions du TTI (702) ; ou
dans lequel la pluralité de niveaux de puissance de transmission DL est dynamique et/ou change dans le temps et/ou dans lequel un nombre de niveaux de puissance de transmission DL au sein de la pluralité de niveaux de puissance de transmission DL, et/ou une puissance de transmission d'un niveau quelconque de la pluralité des niveaux de puissance de transmission DL, sont sélectionnés sur la base d'un état de tampon DL et/ou sur la base de priorités des au moins deux dispositifs radio (506) ;
dans lequel un état de tampon associé au premier groupe est indicatif de données dépassant une capacité de transmission au sein de la première partition (704-1) du TTI (702), et dans lequel les données à transmettre au sein de la première partition (704-1) du TTI (702) sont sélectionnées selon une métrique prédéterminée ; dans lequel la métrique prédéterminée comprend :
une priorité attribuée à un dispositif radio (506) par le RAN ;
une priorité des données attribuée par une couche d'une pile de protocoles ;
une priorité attribuée à une retransmission ;
un temps de mise en file d'attente des données ; et/ou
une ou la qualité de canal.

6. Le procédé (200) de la revendication 5, dans lequel si une quantité des données à transmettre dépasse les ressources au sein de la première partition (704-1) du TTI (702), les données destinées à une transmission dans la première partition (704-1) du TTI (702) sont sélectionnées selon un ordre variant de manière monotone, en particulier décroissant, de la métrique prédéterminée, et des données non sélectionnées pour une transmission dans la première partition (704-1) du TTI (702) sont reportées à une ou plusieurs premières partitions (704-1) d'un ou de plusieurs TTI ultérieurs (702) ; et/ou
dans lequel si une quantité des données à transmettre dépasse les ressources au sein de la première partition (704-1) du TTI (702), les données destinées à une transmission dans la première partition (704-1) du TTI (702) sont sélectionnées selon un ordre variant de manière monotone, en particulier décroissant, de la métrique prédéterminée, et des données non sélectionnées pour une transmission dans la première partition (704-1) du TTI (702) sont reportées à au moins une deuxième partition (704-2) du TTI (702) avec le premier niveau de puissance de transmission DL, et
dans lequel des données à transmettre avec le deuxième niveau de puissance de transmission DL, et/ou n'importe quel niveau de puissance de transmission DL différent du premier niveau de puissance de transmission DL, sont reportées à un ou plusieurs TTI ultérieurs (702) ; et/ou
dans lequel la première partition (704-1) du TTI (702) est temporellement antérieure à la deuxième partition (704-2) du TTI (702), et dans lequel la première puissance de transmission DL est supérieure à la deuxième puissance de transmission DL.

7. Le procédé (200) de l'une quelconque des revendications 1 à 6, dans lequel au moins à la fois le premier niveau de puissance de transmission DL et le deuxième niveau de puissance de transmission DL, ou l'un quelconque des niveaux de puissance de transmission DL au sein de la pluralité des niveaux de puissance de transmission DL, sont attribués à des ressources de transmission, et dans lequel une mise en ordre d'au moins à la fois la première partition (704-1) du TTI (702) et la deuxième partition (704-2) du TTI (702), ou n'importe quelle partition du TTI (702), est déterminée sur la base d'une maximisation d'une fonction de récompense associée à au moins à la fois le premier groupe et le deuxième groupe, ou n'importe quel groupe ;
dans lequel la fonction de récompense comprend :
une somme sur des métriques prédéterminées ;
une somme sur les métriques prédéterminées comprenant une ou plusieurs des métriques prédéterminées de la revendication 5 ;
une somme sur un nombre total de ressources de transmission, et/ou un nombre total de bits, à transmettre ;
une somme sur des temps de mise en file d'attente négatifs ; et/ou une moyenne de temps de mise en file d'attente négatifs.

8. Le procédé (200) de l'une quelconque des revendications 1 à 7, le procédé (200) étant réalisé par un planificateur ; et/ou
comprenant en outre les étapes :
d'envoi d'une demande d'indication de capacité à une unité radio concernant une capacité de l'unité radio à appliquer différents niveaux de puissance de transmission DL au sein de différentes partitions d'un TTI ; et
de réception d'une indication de capacité en réponse à la demande d'indication de capacité ; dans lequel la pluralité de niveaux de puissance de transmission DL est fournie au planificateur par une fonction de gestion du RAN.

9. Un produit de programme d'ordinateur comprenant des portions de code de programme pour réaliser les étapes de l'une quelconque des revendications 1 à 8 lorsque le produit de programme d'ordinateur est exécuté sur un ou plusieurs dispositifs informatiques (904), stockés sur un support d'enregistrement lisible par ordinateur (906).

10. Un planificateur (100) pour la planification en liaison descendante, DL, d'une pluralité de dispositifs radio (506) dans une cellule (504) d'un réseau d'accès radio, RAN, avec une pluralité de niveaux de puissance de transmission DL, le planificateur (100) étant configuré pour :
regrouper au moins deux dispositifs radio (506) selon au moins deux niveaux de puissance de transmission DL différents, le regroupement comprenant l'allocation de chacun des au moins deux dispositifs radio (506) à l'un d'au moins deux groupes non vides et disjoints, chaque groupe étant associé à un niveau de puissance de transmission DL différent ;
transmettre des données à au moins un premier dispositif radio (506) parmi les au moins deux dispositifs radio (506) au sein d'une première partition (704-1) d'un intervalle de temps de transmission, TTI (702), la première partition (704-1) du TTI (702) se voyant attribuer un premier niveau de puissance de transmission DL associé à un premier groupe parmi les au moins deux groupes non vides et disjoints, le premier groupe comprenant l'au moins un premier dispositif radio (506) ; et
transmettre des données à au moins un deuxième dispositif radio (506) parmi les au moins deux dispositifs radio (506) au sein d'une deuxième partition (704-2) du TTI (702), la deuxième partition (704-2) du TTI (702) se voyant attribuer un deuxième niveau de puissance de transmission DL associé à un deuxième groupe parmi les au moins deux groupes non vides et disjoints, le deuxième groupe comprenant l'au moins un deuxième dispositif radio (506) ;
dans lequel le deuxième groupe diffère du premier groupe et dans lequel le deuxième niveau de puissance de transmission DL diffère du premier niveau de puissance de transmission DL.

11. Le planificateur (100) de la revendication 10, configuré en outre pour réaliser les étapes de, ou comprendre les caractéristiques de, l'une quelconque des revendications 2 à 8.

12. Une station de base (502 ; 900 ; 1012 ; 1012a ; 1012b ; 1012c ; 1120) pour la planification en liaison descendante, DL, d'une pluralité de dispositifs radio (506) dans une cellule (504) d'un réseau d'accès radio, RAN, avec une pluralité de niveaux de puissance de transmission DL, la station de base (502 ; 900 ; 1012 ; 1012a ; 1012b ; 1012c ; 1120) étant configurée pour :
regrouper au moins deux dispositifs radio (506) selon au moins deux niveaux de puissance de transmission DL différents, le regroupement comprenant l'allocation de chacun des au moins deux dispositifs radio (506) à l'un d'au moins deux groupes non vides et disjoints, chaque groupe étant associé à un niveau de puissance de transmission DL différent ;
transmettre des données à au moins un premier dispositif radio (506) parmi les au moins deux dispositifs radio (506) au sein d'une première partition (704-1) d'un intervalle de temps de transmission, TTI (702), la première partition (704-1) du TTI (702) se voyant attribuer un premier niveau de puissance de transmission DL associé à un premier groupe parmi les au moins deux groupes non vides et disjoints, le premier groupe comprenant l'au moins un premier dispositif radio (506) ; et
transmettre des données à au moins un deuxième dispositif radio (506) parmi les au moins deux dispositifs radio (506) au sein d'une deuxième partition (704-2) du TTI (702), la deuxième partition (704-2) du TTI (702) se voyant attribuer un deuxième niveau de puissance de transmission DL associé à un deuxième groupe parmi les au moins deux groupes non vides et disjoints, le deuxième groupe comprenant l'au moins un deuxième dispositif radio (506) ;
dans lequel le deuxième groupe diffère du premier groupe et dans lequel le deuxième niveau de puissance de transmission DL diffère du premier niveau de puissance de transmission DL.

13. La station de base (502 ; 900 ; 1012 ; 1012a ; 1012b ; 1012c ; 1120) de la revendication 12, configurée en outre pour réaliser les étapes de, ou comprendre les caractéristiques de, l'une quelconque des revendications 2 à 8.

14. Un système de communication (1000 ; 1100) incluant :
un planificateur (100) pour la planification en liaison descendante, DL, d'une pluralité de dispositifs radio (506) dans une cellule (504) d'un réseau d'accès radio, RAN, avec une pluralité de niveaux de puissance de transmission DL, le planificateur (100) comprenant une circuiterie de traitement (904), la circuiterie de traitement (904) du planificateur (100) étant configurée pour exécuter les étapes de l'une quelconque des revendications 1 à 8 ; et
un ordinateur hôte (1030 ; 1110), l'ordinateur hôte (1030 ; 1110) comprenant :
une circuiterie de traitement (1118) configurée pour fournir des données utilisateur ; et
une interface de communication (1116) configurée pour transférer des données utilisateur à un réseau radio cellulaire ou ad hoc pour transmission à un équipement utilisateur, UE (1091 ; 1092 ; 1130).

15. Le système de communication (1000 ; 1100) de la revendication 14, incluant en outre l'UE (1091 ; 1092 ; 1130),
dans lequel le réseau radio (1010 ; 1011) comprend en outre une station de base (502 ; 900 ; 1012 ; 1012a ; 1012b ; 1012c ; 1120) configurée pour communiquer avec l'UE (1091 ; 1092 ; 1130), la station de base (502 ; 900 ; 1012 ; 1012a ; 1012b ; 1012c ; 1120) comprenant le planificateur (100),
dans lequel :
la circuiterie de traitement (1118) de l'ordinateur hôte (1030 ; 1110) est configurée pour exécuter une application hôte (1112), fournissant ainsi les données utilisateur ; et
la circuiterie de traitement (1138) de l'UE (1091 ; 1092 ; 1130) est configurée pour exécuter une application client (1132) associée à l'application hôte (1112).
